# EUROPEAN PATENT APPLICATION

(11) **EP 2 685 336 A1**
(43) Date of publication of application: **15.01.2014**
(21) Application number: 13173903.9
(22) Date of filing: 26.06.2013
(51) Int. Cl.: G05D 1/00, G05D 1/10, G06Q 10/00, G06Q 10/04

(54) **Autonomous airspace flight planning and virtual airspace containment system**

(30) Priority: 13.07.2012 US 201261671367 P; 12.06.2013 US 201313916424
(71) Applicant: Honeywell International Inc., Morristown, NJ 07962-2245 (US)
(72) Inventor: Goossen, Emray R., Morristown, NJ New Jersey 07962-2245 (US); Goossen, Katherine, Morristown, NJ New Jersey 07962-2245 (US); Lafler, Scott H., Morristown, NJ New Jersey 07962-2245 (US)
(74) Representative: Houghton, Mark Phillip

(57) **Abstract**

Devices, systems, and techniques for generating a graphical user interface including a three-dimensional virtual containment space for flight of an unmanned aerial vehicle (UAV) are described. In some examples, the graphical user interface may be generated based on user input defining a virtual boundary for the flight of the UAV.

## Description

This application claims the benefit of U.S. Provisional Patent Application Serial No. 61/671,367 by Emray R. Goossen et al., which was filed on July 13, 2012, and is entitled "AUTONOMOUS AIRSPACE FLIGHT PLANNING AND VIRTUAL AIRSPACE CONTAINMENT SYSTEM." U.S. Provisional Patent Application Serial No. 61/671,367 by Emray R. Goossen et al. is incorporated herein by reference in its entirety.

### TECHNICAL FIELD

This disclosure relates to flight planning for unmanned aerial vehicles.

### BACKGROUND

An unmanned aerial vehicle (UAV) is an aircraft that flies without a human crew on board the aircraft. A UAV can be used for various purposes, such as the collection of ambient gaseous particles, observation, thermal imaging, and the like. A micro air vehicle (MAV) is one type of UAV, which, due to its relatively small size, can be useful for operating in complex topologies, such as mountainous terrain, urban areas, and confined spaces. The structural and control components of a MAV are constructed to be relatively lightweight and compact. Other types of UAVs may be larger than MAVs and may be configured to hover or may not be configured to hover. A UAV may include, for example, a ducted fan configuration or a fixed wing configuration.

### SUMMARY

In some aspects, the disclosure is directed to generating a graphical user interface (GUI) that may be used in flight planning and other aspects of flying an unmanned aerial vehicle (UAV). In some examples, a processor (e.g., of a computing device) is configured to receive, via a user interface, user input defining a virtual boundary for flight of the UAV, and generate a GUI including a three-dimensional (3D) virtual containment space for flight of the UAV based on the user input. The systems and techniques described herein may provide tools for enhancing safety and accuracy of flight of the UAV.

In one example, the disclosure is directed to a method comprising receiving, via a user interface, user input defining a virtual boundary for flight of a UAV; and generating, with a processor, a GUI including a 3D virtual containment space for the flight of the UAV based on the user input defining the virtual boundary.

In another example, the disclosure is directed to a system comprising a user interface configured to receive user input defining a virtual boundary for flight of a UAV; and a processor configured to generate a GUI including a 3D virtual containment space for the flight of the UAV based on the user input defining the virtual boundary.

In another example, the disclosure is directed to a system comprising means for receiving user input defining a virtual boundary for flight of UAV; and means for generating a GUI including a 3D virtual containment space for the flight of the UAV based on the user input defining the virtual boundary.

The disclosure is also directed to an article of manufacture comprising a computer-readable storage medium. The computer-readable storage medium comprises computer-readable instructions that are executable by a processor. The instructions cause the processor to perform any part of the techniques described herein. The instructions may be, for example, software instructions, such as those used to define a software or computer program. The computer-readable medium may be a computer-readable storage medium such as a storage device (e.g., a disk drive, or an optical drive), memory (e.g., a Flash memory, read only memory (ROM), or random access memory (RAM)) or any other type of volatile or non-volatile memory or storage element that stores instructions (e.g., in the form of a computer program or other executable) to cause a processor to perform the techniques described herein. The computer-readable medium may be a nontransitory storage medium.

The details of one or more examples are set forth in the accompanying drawings and the description below. Other features, objects, and advantages of the disclosed examples will be apparent from the description and drawings, and from the claims.

### BRIEF DESCRIPTION OF DRAWINGS

FIG. 1 is schematic diagram of an example vehicle flight system that includes a UAV and a ground station.

FIG. 2 is an example operator control unit (OCU) configured to control the flight of the UAV of FIG. 1.

FIGS. 3A-3C illustrate example flight areas that may be selected by a user and inputted into an OCU of an example ground station.

FIG. 4 illustrates an example GUI generated by the OCU of FIG. 2, where the GUI illustrates an example restricted airspace and an example airspace defined by a user.

FIG. 5 illustrates an example flight plan.

FIG. 6 is a block diagram illustrating example components of the example OCU of FIG. 2.

FIG. 7 is a flow chart illustrating an example method of automatically generating and filing a flight plan for a UAV in a controlled airspace.

FIG. 8 is an illustration of an authorized airspace and virtual boundary defined, at least in part, by a user interacting with the OCU of FIG. 2.

FIG. 9 illustrates an example GUI generated and presented by the OCU of FIG. 2, where the GUI provides an overview of an airspace in which a UAV may be flown.

FIG. 10 illustrates the characteristics of certain approved airspaces as a function of altitude.

FIG. 11 illustrates an example GUI generated and presented by the OCU of FIG. 2, where the GUI is configured to receive user input defining a vertical component of the flight path.

FIG. 12 is a flow diagram illustrating an example technique for generating a GUI including a 3D virtual containment space for flight of a UAV.

FIG. 13 illustrates an example GUI generated and presented by the OCU of FIG. 2, where the GUI displays a desired flight path and a UAV position within a flight corridor defined based on the desired flight path.

FIG. 14 illustrates an example GUI generated and presented by the OCU of FIG. 2, where the GUI displays a selected flight location in combination with overlaid information that may help a user define a flight path or flight area within the flight location.

### DETAILED DESCRIPTION

The rapidity with which emergency personnel respond to an event may be critical to the success of their mission. For example, military personnel or first responders, including, e.g., Hazardous Materials (HAZMAT) and Special Weapons and Tactics (SWAT) teams, firemen, and policemen, may be required to respond quickly to dynamic and unpredictable situations. In the execution of their duties, such emergency personnel may employ a UAV for surveillance, reconnaissance, and other functions. Because, for example, first responders operate in populated and often highly populated urban areas, they may need to employ the UAV in one or more types of controlled airspaces. Flying the UAV as soon as possible and as accurately as possible within the mission may be important, in some cases.

In some examples, the disclosure describes tools for enhancing safety and accuracy of flight of a UAV. For example, the systems and methods described herein may provide tools (also referred to herein as "flight planning aids" in some examples) to a user, such as a pilot of a UAV, that allow the user to visually view a space within which the UAV can fly (e.g., a space within which the UAV is permitted to fly under governmental restrictions, a space in which the UAV is required to fly, which may depend on a particular mission plan for the UAV or the entity that operates the UAV, and the like). In some examples, the space may be a 3D space (e.g., volume) within which flight of the UAV should be contained. A 3D virtual containment space may be a virtual space, e.g., rendered virtually, such as by a GUI, that is defined by three-dimensions or components, such as latitude, longitude, and altitude components. For example, the 3D virtual containment space may be a volume that is defined by latitude, longitude, and altitude values, such that the 3D virtual containment space may correspond to the latitude, longitude, and altitude values.

Viewing a visual representation of the 3D containment space may allow the user to more safely and accurately fly the UAV within the space. Thus, in some examples, the user may provide input defining a virtual boundary (e.g., within which it may be desirable for the UAV to fly), and a processor may generate a GUI including the 3D virtual containment space based on the user input. In some examples, a processor of a device (e.g., an operator control unit or UAV) may, for example, determine latitude, longitude, and altitude values based on a defined 3D virtual containment space by determining the borders of the 3D virtual containment space. The latitude, longitude, and altitude values may be useful for, for example, populating a flight plan or otherwise controlling flight of a UAV, e.g., automatically by a device or manually by a UAV pilot.

In some examples, devices, systems, and techniques described in this disclosure may automatically generate and file an electronic flight plan for a UAV with an air traffic control (ATC) system in order to relatively quickly and easily secure approval for flying the UAV in a controlled airspace (compared to manual flight plan generation and submission), e.g., based on the virtual boundary or the 3D virtual containment space. The ATC system can be, for example, a governmental system operated and maintained by a governmental agency. Using some examples devices, systems, and techniques described herein, certain activities in the development of a mission involving the UAV, such as the generation of a flight plan that is compliant with regulated airspaces and mission boundaries, are enabled with automated capabilities and with 3D rendering of resource information about those airspaces and the flight plan. During the flight plan execution, system provision for autonomous flight containment within the prescribed mission area may assist the operator in maintaining compliance.

Some examples disclosed herein may facilitate workload reduction on operators, reduce error in flight planning and ATC coordination, speed the ATC approval process, and provide hazard reduction separation planning between operators and the ATC controller. In some examples, one or more flight locations for a UAV are defined with a computing device. An electronic flight plan may be automatically generated based on the defined flight locations for the UAV. The flight plan may be transmitted to an ATC system. ATC approval, with or without modifications, or denial of the flight plan may also be received electronically and indicated on the operator device.

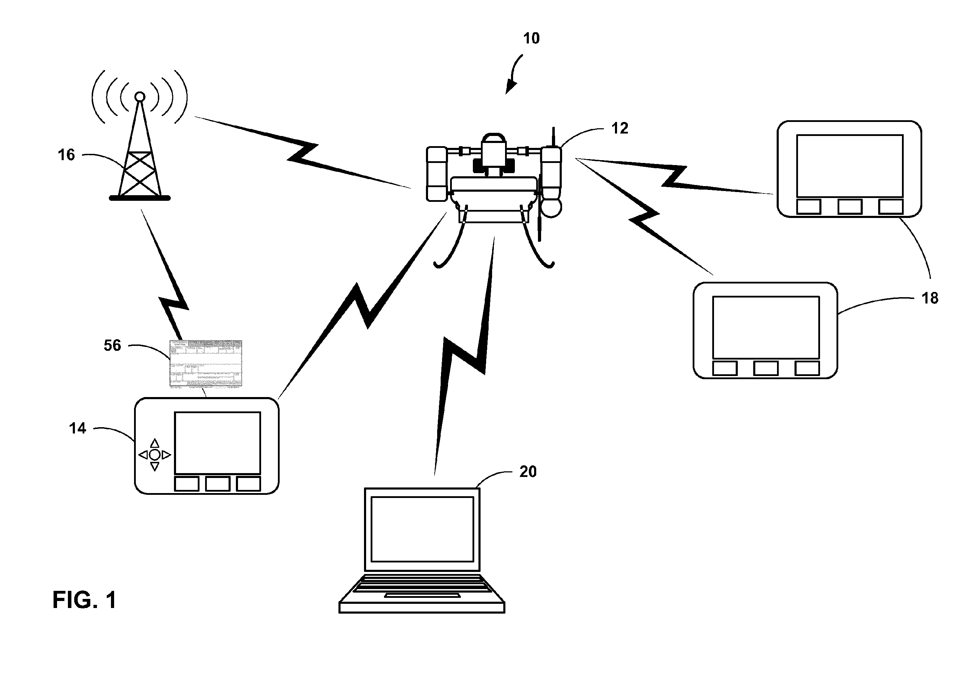

FIG. 1 is a schematic diagram of system 10 including UAV 12, ground station 14, ATC tower 16, local terminals 18, and remote terminal 20. In FIG. 1, ground station 14, local terminals 18, and remote terminal 20 are each in wireless communication with UAV 12. Additionally, ATC tower 16 is in wireless communication with both UAV 12 and ground station 14.

The wireless communications to and from UAV 12 and ground station 14, ATC tower 16, local and remote terminals 18, 20, respectively, as well as the ground station and the ATC tower may include any of a number of wireless communication technologies, including, e.g., cellular, wireless network, or satellite technologies. For example, wireless communications in system 10 may be implemented according to one of the 802.11 specification sets, time division multi access (TDMA), frequency division multi access (FDMA), orthogonal frequency divisional multiplexing (OFDM), WI-FI, wireless communication over whitespace, ultra wide band communication, or another standard or proprietary wireless network communication protocol. In another example, system 10 may employ wireless communications over a terrestrial cellular network, including, e.g. a GSM (Global System for Mobile Communications), CDMA (Code Division Multiple Access), EDGE (Enhanced Data for Global Evolution) network, or any other network that uses wireless communications over a terrestrial cellular network. In other examples, any one or more of UAV 12, ground station 14, ATC 16, local terminals 18, and remote terminal 20 may communicate with each other via a wired connection.

System 10 may be employed for various missions, such as to assist emergency personnel with a particular mission that involves the use of UAV 12. In one example, a SWAT team may employ system 10 to fly UAV 12 in the course of executing one of their missions. For example, a SWAT team member trained in piloting UAV 12 may employ ground station 14 to communicate with and fly the UAV. Other SWAT team members may use local terminals 18 to receive communications, e.g. radio and video signals, from UAV 12 in flight. Additionally, a SWAT commander may employ remote terminal 20 to observe and manage the execution of the mission by, among other activities, receiving communications, e.g. radio, sensor feeds, and video signals from UAV 12 in flight. In other examples, system 10 may include more or fewer local and remote terminals 18, 20, respectively.

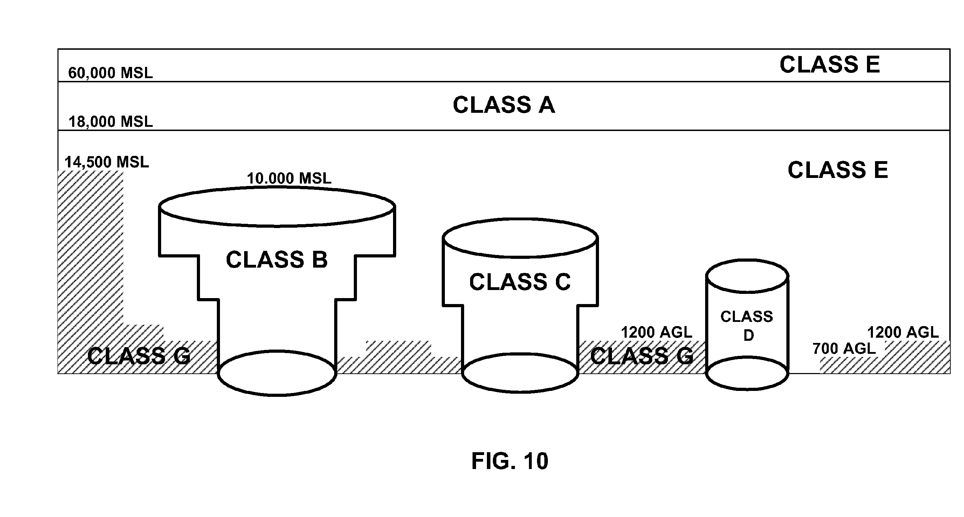

In the course of executing their missions, the SWAT team employing system 10 may be called on to pilot UAV 12 in populated, and, sometimes, highly populated urban areas. The FAA or another governmental agency (which may differ based on the country or region in which UAV 12 is flown) may promulgate regulations for the operation of aerial vehicles in different kinds of airspaces. Example airspaces are shown and described below with respect to FIG. 10. As an example of regulations promulgated by the FAA, in unpopulated Class G areas, the FAA generally does not regulate air travel below 400 feet above the ground, which can be within the range a UAV employed by a SWAT or other emergency personnel may ordinarily fly. In some populated areas, the FAA may not regulate air travel below 400 feet for vehicles weighing less than some threshold, which again the UAV employed by a SWAT or other emergency personnel may be below.

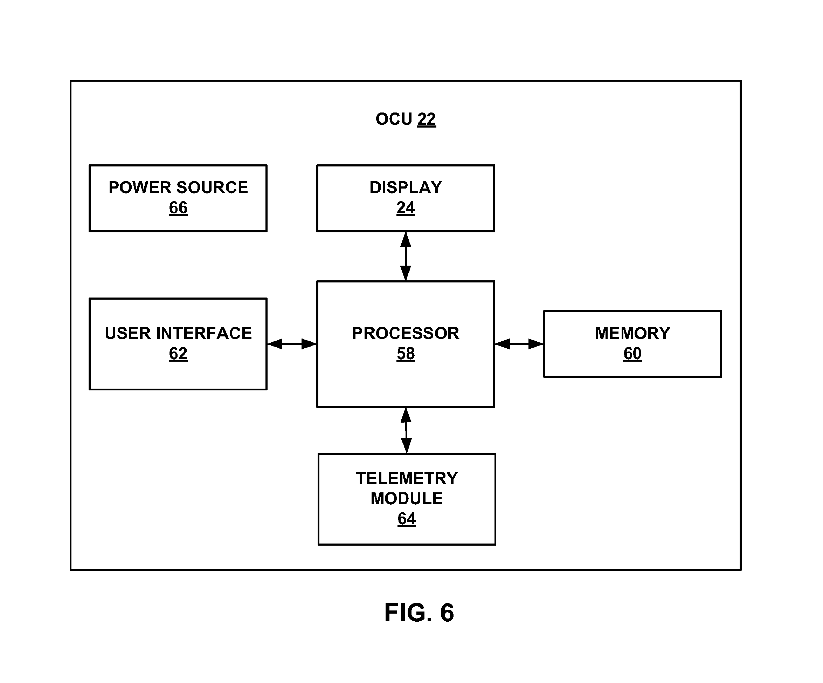

However, in some urban populated areas, the FAA regulates air travel in an air space from the ground up for all types of vehicles. For example, in class C airspaces (shown in FIG. 6), which generally correspond to small airports in an urban area, the FAA requires all vehicles to file flight plans and be in contact with ATC before operating in the airspace. However, for emergency personnel, such as a SWAT team, filing and gaining approval for a flight plan every time it is called on to respond to an emergency situation with a UAV in a controlled airspace may require additional pilot training and may cause significant response time delays. For example, a SWAT team UAV pilot may not be trained in the technical requirements of FAA flight plan rules and regulations or be familiar with flight plan forms and terminology. As such, in order to manually generate and file flight plans, such first responder and other emergency personnel may require additional training. Manually filling out and physically delivering flight plans may be a time consuming process that acts to delay response times for SWAT and other emergency personnel. Thus, in some examples, the UAV pilot of the SWAT team (or of another UAV pilot or user of system 10) may employ ground station 14 to automatically generate an electronic flight plan for UAV 12, and, in some examples, automatically file the flight plan with an ATC system via ATC tower 16, or via a wired communication network, to more quickly and easily secure approval for flying the UAV in a controlled airspace compared to examples in which the UAV pilot manually fills in a flight plan form and manually submits the form to ATC.

In one example, UAV 12 includes a ducted fan MAV, which includes an engine, avionics and payload pods, and landing gear. The engine of UAV 12 may be operatively connected to and configured to drive the ducted fan of the vehicle. For example, UAV 12 may include a reciprocating engine, such as a two cylinder internal combustion engine that is connected to the ducted fan of the UAV by an energy transfer apparatus, such as, but not limited to, a differential. In another example, UAV 12 may include other types of engines including, e.g., a gas turbine engine or electric motor. While vertical take-off and landing vehicles are described herein, in other examples, UAV 12 may be a fixed wing vehicle that is not configured to hover.

The ducted fan of UAV 12 may include a duct and a rotor fan. In some examples, the ducted fan of UAV 12 includes both a rotor fan and stator fan. In operation, the engine drives the rotor fan of the ducted fan of UAV 12 to rotate, which draws a working medium gas including, e.g., air, into the duct inlet. The working medium gas is drawn through the rotor fan, directed by the stator fan and accelerated out of the duct outlet. The acceleration of the working medium gas through the duct generates thrust to propel UAV 12. UAV 12 may also include control vanes arranged at the duct outlet, which may be manipulated to direct the UAV along a particular trajectory, i.e., a flight path. The duct and other structural components of UAV 12 may be formed of any suitable material including, e.g., various composites, aluminum or other metals, a semi rigid foam, various elastomers or polymers, aeroelastic materials, or even wood.

As noted above, UAV 12 may include avionics and payload pods for carrying flight control and management equipment, communications devices, e.g. radio and video antennas, and other payloads. In one example, UAV 12 may be configured to carry an avionics package including, e.g., avionics for communicating to and from the UAV and ground station 14, ATC tower 16, and local and remote terminals 18, 20, respectively. Avionics onboard UAV 12 may also include navigation and flight control electronics and sensors. The payload pods of UAV 12 may also include communication equipment, including, e.g., radio and video receiver and transceiver communications equipment. In addition to, or instead of, the payload described above, payload carried by UAV 12 can include communications antennae, which may be configured for radio and video communications to and from the UAV, and one or more microphones and cameras for capturing audio and video while in flight. Other types of UAVs are contemplated and can be used with system 10 for example, fixed wing UAVs and rotary wing UAVs.

Local terminals 18 may comprise handheld or other dedicated computing devices, or a separate application within another multi-function device, which may or may not be handheld. Local terminals 18 may include one or more processors and digital memory for storing data and executing functions associated with the devices. A telemetry module may allow data transfer to and from local terminals 18 and UAV 12, local internet connections, ATC tower 16, as well as other devices, e.g. according to one of the wireless communication techniques described above.

In one example, local terminals 18 employed by users, e.g., SWAT team members, may include a portable handheld device including display devices and one or more user inputs that form a user interface, which allows the team members to receive information from UAV 12 and interact with the local terminal. In one example, local terminals 18 include a liquid crystal display (LCD), light emitting diode (LED), or other display configured to display a video feed from a video camera onboard UAV 12. In this manner, SWAT team members may employ local terminals 18 to observe the environment through which UAV 12 is flying, e.g., in order to gather reconnaissance information before entering a dangerous area or emergency situation, or to track a object, person or the like in a particular space.

Remote terminal 20 may be a computing device that includes a user interface that can be used for communications to and from UAV 12. Remote terminal 20 may include one or more processors and digital memory for storing data and executing functions associated with the device. A telemetry module may allow data transfer to and from remote terminal 20 and UAV 12, local internet connections, ATC tower 16, as well as other devices, e.g. according to one of the wireless communication techniques described above.

In one example, remote terminal 20 may be a laptop computer including a display screen that presents information from UAV 12, e.g., radio and video signals to the SWAT commander and a keyboard or other keypad, buttons, a peripheral pointing device, touch screen, voice recognition, or another input mechanism that allows the commander to navigate though the user interface of the remote terminal and provide input. In other examples, rather than a laptop, remote terminal 20 may be a wrist mounted computing device, video glasses, a smart cellular telephone, or a larger workstation or a separate application within another multi-function device.

Ground station 14 may include an operator control unit (OCU) that is employed by a pilot or another user to communicate with and control the flight of UAV 12. Ground station 14 may include a display device for displaying and charting flight locations of UAV 12, as well as video communications from the UAV in flight. Ground station 14 may also include a control device for a pilot to control the trajectory of UAV 12 in flight. For example, ground station 14 may include a control stick that may be manipulated in a variety of directions to cause UAV 12 to change its flight path in a variety of corresponding directions. In another example, ground station 14 may include input buttons, e.g. arrow buttons corresponding to a variety of directions, e.g. up, down, left, and right that may be employed by a pilot to cause UAV 12 to change its flight path in a variety of corresponding directions. In another example, ground station 14 may include another pilot control for directing UAV 12 in flight, including, e.g. a track ball, mouse, touchpad, touch screen, or freestick. Other input mechanisms for controlling the flight path of UAV 12 are contemplated to include waypoint and route navigation depending on the FAA regulations governing the specific mission and aircraft type.

In addition to the display and pilot control features, ground station 14 may include a computing device that includes one or more processors and digital memory for storing data and executing functions associated with the ground station. A telemetry module may allow data transfer to and from ground station 14 and UAV 12, as well as ATC tower 16, e.g., according to a wired technique or one of the wireless communication techniques described above.

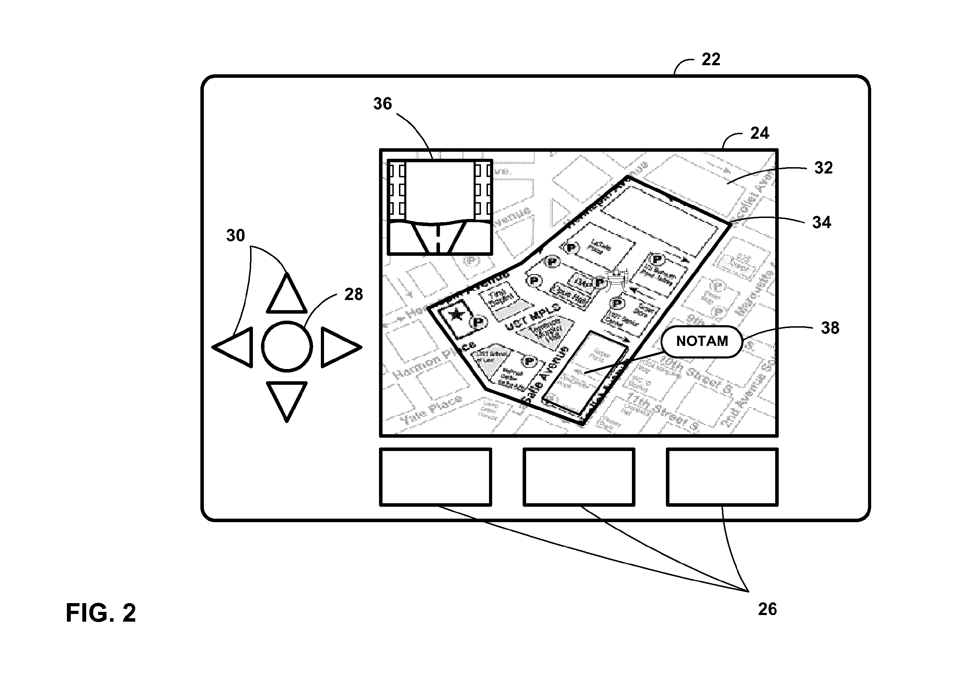

In one example, ground station 14 includes a handheld OCU including an LCD display and control stick. The UAV pilot (also referred to herein as a pilot-in-control ("PIC")) may employ the LCD display to define the flight locations of UAV 12 and view video communications from the vehicle. During flight of UAV 12, the pilot may control the flight path of the UAV by moving the control stick of ground station 14 in a variety of directions. The pilot may employ the handheld OCU of ground station 14 to define one or more flight locations for UAV 12, automatically generate an electronic flight plan based on the flight locations for the UAV, and transmit the flight plan to an ATC system via ATC tower 16. The configuration and function of ground station 14 is described in greater detail with reference to example OCU 22 of FIG. 2.

As described in more detail below, a user, e.g., the UAV pilot, may provide user input defining a virtual boundary for flight of the UAV. For example, the user may provide input defining the virtual boundary via any device of system 10 configured to receive input from a user, such as ground station 14, local terminals 18, or remote terminal 20. A processor of system 10, such as a processor of ground station 14, local terminals 18, or remote terminal 20, may subsequently generate a GUI including a 3D containment space for flight of the UAV based on the user input. In this way, the UAV pilot may visually view, via the GUI, the 3D space within which the UAV is to fly, which may allow the pilot to accurately and safely maneuver the UAV.

FIG. 2 is a schematic diagram of an example OCU 22, which may be employed at ground station 14 by, e.g., the UAV pilot to communicate with and control the trajectory of UAV 12 in flight. In addition, the OCU 22 may be configured to receive input from, e.g., the UAV pilot defining a virtual boundary (e.g., flight area 34) for flight of the UAV 12, and may additionally be configured to generate a GUI (e.g., on display 24) including a 3D virtual containment space (not shown in FIG. 2) for the flight of UAV 12, based on the input. In some examples, the pilot may also employ OCU 22 to automatically generate an electronic flight plan for UAV 12 and, in some examples, automatically file the flight plan with an ATC system via ATC tower 16 to quickly and easily secure approval for flying the UAV in a controlled airspace.

OCU 22 includes display 24, input buttons 26, and control stick 28. OCU 22 may, in some cases, automatically generate the flight plan based on the 3D virtual containment space. Arrows 30 display up, down, left, and right directions in which control stick 28 may be directed by, e.g., the UAV pilot to control the flight of UAV 12.

In the example of FIG. 2, display 24 may be a touch screen display capable of displaying text and graphical images related to operating UAV 12 in flight and capable of receiving user input for defining and automatically generating a flight plan for the UAV in a controlled airspace. For example, display 24 may comprise an LCD touch screen display with resistive or capacitive sensors, or any type of display capable of receiving input from the UAV pilot via, e.g., one of the pilot's fingers or a stylus.

Input buttons 26 may enable a variety of functions related to OCU 22 to be executed by, e.g., the UAV pilot or another user. In one example, buttons 26 may execute specific functions, including, e.g., powering OCU 22 on and off, controlling parameters of display 24, e.g. contrast or brightness, or navigating through a user interface. In another example, however, one or more of buttons 26 may execute different buttons depending on the context in which OCU 22 is operating at the time. For example, some of buttons 26 may include up and down arrows, which may alternatively be employed by the UAV pilot to, e.g., control the illumination level, or backlight level, of display 24 to navigate through a menu of functions executable by OCU 22, or to select and/or mark features on map 32. In some examples, buttons 26 may take the form of soft keys (e.g., with functions and contexts indicated on display 24), with functionality that may change, for example, based on current programming operation of OCU 22 or user preference. Although example OCU 22 of FIG. 2 includes three input buttons 26, other examples may include fewer or more buttons.

Control stick 28 may comprise a pilot control device configured to enable a user of OCU 22, e.g., the UAV pilot, to control the path of UAV 12 in flight. In the example of FIG. 2, control stick 28 may be a "joy stick" type device that is configured to be moved in any direction 360 degrees around a longitudinal axis of the control stick perpendicular to the view shown in FIG. 2. For example, control stick 28 may be moved in up, down, left, and right directions generally corresponding to the directions of up, down, left and right arrows 30 on OCU 22. Control stick 28 may also, however, be moved in directions intermediate to these four directions, including, e.g., a number of directions between up and right directions, between up and left directions, between down and right, or between down and left directions. In another example, control stick 28 may be another pilot control device, including, e.g., a track ball, mouse, touchpad or a separate freestick device.

As noted above, a pilot, e.g., the UAV pilot, may employ OCU 22 as part of ground station 14 to communicate with and control the trajectory of UAV 12 in flight, as well as to automatically generate and, in some examples, file an electronic flight plan for the UAV with an ATC system via ATC tower 16 to quickly and easily secure approval for flying the UAV in a controlled airspace. In one example, the UAV pilot may need to operate UAV 12 in an area including controlled airspace. In such an example, display 24 of OCU 22 may generate and display map 32 of the area within which the UAV pilot needs to operate UAV 12. In some examples, map 32 may be automatically retrieved from a library of maps stored on memory of OCU 22 based on a Global Positioning System (GPS) included in the OCU or manually by the pilot. In other examples, map 32 may be stored by a remote device other than OCU 22, e.g., a remote database or a computing device that is in wired or wireless communication with OCU 22.

In some examples, map 32, as well as the flight locations described in detail below, may be formatted to be compatible with the ATC system, such as sectional charts, to which the flight plan will be transmitted, e.g. via ATC tower 16. In one example, the format employed by OCU 22 for map 32 may include sectional charts, airport approach plates, and notice to air man (NOTAM) messages. A sectional chart is one type of aeronautical chart employed in the United States that is designed for navigation under Visual Flight Rules (VFR). A sectional chart may provide detailed information on topographical features, including, e.g., terrain elevations, ground features identifiable from altitude (e.g. rivers, dams, bridges, buildings, etc.), and ground features useful to pilots (e.g. airports, beacons, landmarks, etc.). Such charts may also provide information on airspace classes, ground-based navigation aids, radio frequencies, longitude and latitude, navigation waypoints, navigation routes, and more. Sectional charts are available from a variety of sources including from the FAA and online from "SkyVector" (at www.skyvector.com).

In one example, OCU 22 may be configured to present map 32 and other elements, such as flight locations, to operators in different kinds of graphical formats on display 24. OCU 22 may, for example, be configured to process standard graphical formats, including, e.g., CADRG, GeoTiff, Satellite Imagery, CAD drawings, and other standard and proprietary map and graphics formats.

OCU 22 may also generate overlay objects (including point areas and lines) to create boundaries on map 32 that comply with FAA UAV flight regulations in the airspace in which UAV 12 is expected to operate, as well as boundaries generated by the ATC system. For example, OCU 22 may generate boundaries that mark where class C and class B airspaces intersect. OCU 22 may also display overlays of dynamically approved ATC flight plan boundaries on map 32. Additional features including city and building details and photos may be overlaid on map 32 as well. OCU 22 may also display a 3D virtual containment space overlaid on map 32, as discussed in further detail below.

Additionally, using touch screen display 24 and/or input buttons 26, the UAV pilot may pan, zoom, or otherwise control and/or manipulate map 32 displayed on the display of OCU 22. The UAV pilot may also employ the picture-in-picture (PIP) first person window 36 to operate UAV 12, which can display video signals transmitted from a camera onboard the UAV to represent the perspective from the vehicle as it flies. However, before piloting UAV 12 in the area represented by map 32, a flight plan may be generated and filed to secure approval for flying in the controlled airspace.

The UAV pilot may employ OCU 22 to automatically generate a flight plan and, in some examples, transmit a flight plan to an ATC system, e.g., via ATC tower 16 of system 10 of FIG. 1. For example, the pilot (or other user) can provide user input indicative of a flight area (e.g., a virtual boundary for flight of a UAV or a flight path) using OCU 22. For example, the pilot may define one or more flight locations for UAV 12 using OCU 22. For such as by drawing one or more flight locations for UAV 12 on touch-screen display 24 of OCU 22 using, e.g., one of the pilot's finger or with a stylus or other computer pointing device. In the example of FIG. 2, the flight locations of UAV 12 have been defined by drawing flight area 34 on touch-screen 24 of OCU 22, which represents the locations the UAV is expected to fly during the execution of the SWAT team mission, or at least the area in which clearance for UAV 12 flight is desirable. Flight area 34 drawn on touch-screen 24 of OCU 22 may be any number of regular or irregular shapes, including, e.g., any number of different polygon shapes or circular, elliptical, oval or other closed path curved shapes. In some examples, flight area 34 is an example virtual boundary.

Flight area 34 may be two-dimensional (2D) or 3D. In some examples, the UAV pilot or another user may draw flight area 34 (e.g., defining two or three dimensions) on touch-screen 24 in two dimensions, e.g., as shown in FIG. 2, and a processor of the OCU 22 may render the flight area 34 in two dimensions or in three dimensions (e.g., by adding a third dimension such as altitude). For example, a processor of the OCU 22 may receive user input from the UAV pilot or other user defining flight area 34 in only latitude and longitude components, and may add an altitude component to render a 3D virtual containment space for the UAV 12 as a GUI on the touch-screen 24 of OCU 22. In other examples, the UAV pilot or another user may contribute user input defining flight area 34 in three dimensions, e.g., by latitude, longitude, and altitude components, and the processor of the OCU 22 may render the 3D virtual containment space for the UAV 12 as a part of a GUI on the touch-screen 24 of OCU 22 based on the user input.

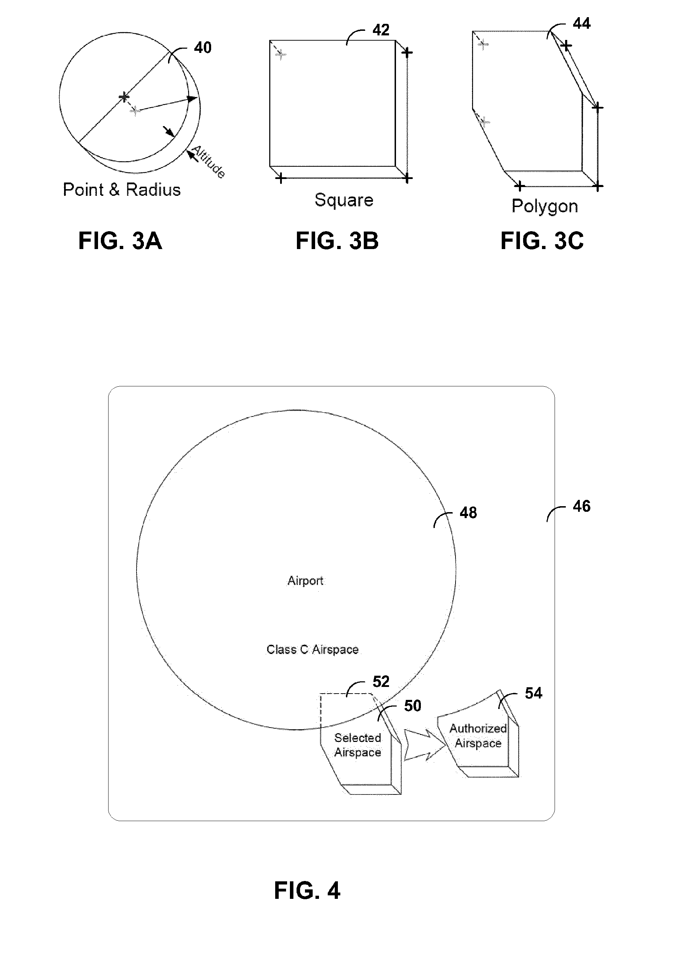

FIGS. 3A-3C illustrates example flight areas 40, 42, and 44 that may be defined by a user (e.g., by drawing the flight area over map 32 or by selecting from a predefined set of flight area configurations) and input into OCU 22. The example flight areas may be 2D (e.g., may define only two of latitude, longitude, and altitude of a volume of space) or may be 3D (e.g., may define latitude, longitude, and altitude of a volume of space).

The example flight areas 40, 42, and 44 shown in FIGS. 3A-3C are 3D flight areas, such as 3D virtual containment spaces, e.g., within which UAV 12 may be contained. In some examples, the user (e.g., the UAV pilot) may define the flight area in two-dimensions (e.g., as illustrated by flight area 34 in FIG. 2) and a processor of the system (e.g., a processor of OCU 22) may add a third-dimension (e.g., an altitude component) to produce a 3D flight area, such as those illustrated in FIGS. 3A-3C. In other examples, the user may define the flight area in three-dimensions, e.g., by providing latitude, longitude, and altitude components.

The user may provide input selecting (also referred to as defining in some examples) a flight area using any suitable technique, such as by clicking several points on map 32 (in which case a processor of OCU 22 may define a virtual boundary by drawing lines between the selected points) around the area in which to fly, by doing a free drawing around the area, or selecting some predefined shapes (e.g., the shapes shown in FIGS. 3A-3C) and moving and/or sizing the shapes over map 32 to define a virtual boundary. Thus, in some examples, the flight area may be predefined and stored by OCU 22, while in other examples, the flight area may be defined ad hoc by the user, which may provide more flexibility than predefined flight areas. The user may, in some examples, also specify the altitude of the ceiling in which UAV 12 may fly around the specified area, or OCU 22 may extrapolate an altitude (e.g., based on restricted airspace, regulations, obstacles, or other parameters).

In another example, instead of defining the flight locations as a flight area, the UAV pilot (or other user) may draw a flight path along or about which UAV 12 is expected to fly on touch-screen display 24 of OCU 22 to define the flight locations of the UAV. For example, the UAV pilot may define a flight path on display 24 of OCU 22 that corresponds to a section of a highway along or about which UAV 12 is expected to fly. In other examples, a user of OCU 22, e.g. the UAV pilot may define the flight locations of UAV 12 in a different manner. For example, in a mission in which emergency personnel activities will be limited to a single building, a user may simply select a building or other landmark on map 32 around which and within which UAV 12 is expected to fly. OCU 22 may then automatically select a radius around the selected building or other landmark to automatically generate the flight location of UAV 12.

In some examples, OCU 22 may automatically limit the flight locations of UAV 12 defined by the UAV pilot. For example, the UAV pilot (or another user) may provide input defining a virtual boundary in two dimensions or three dimensions, and OCU 22 (e.g., a processor of OCU 22) may further limit the virtual boundary based on any one or more of known locations of restricted military areas or airspace classes (e.g., as defined by the government), information about traffic, information about populations of various areas, information about the location of events in which a large number of people may be gathered, and weather information. As an example, the FAA prescribes a limit on the distance away from the pilot-in-control (PIC) a UAV may fly. The distance limit prescribed by the FAA is referred to herein as the UAV range limit from PIC (URLFP). In some examples, OCU 22 (e.g., a processor of OCU 22) may modify the virtual boundary defined by the user or the virtual containment space generated based on the user input to further exclude airspace in which the UAV would fly outside of the URLFP. In some cases, e.g., with FAA approval, the virtual boundary defined by the user or the virtual containment space generated based on the user input may include an otherwise restricted airspace, and a processor of OCU 22 may further modify the virtual boundary or virtual containment space to exclude the restricted airspace.

In one example, the UAV pilot defines one or more flight locations for UAV 12 using OCU 22. For example, the UAV pilot may draw flight area 34 on touchscreen 24 of OCU 22. Flight area 34 may define a virtual boundary within which UAV 12 is expected to fly in, e.g., the execution of a SWAT team mission. However, some or all of the boundaries of flight area 34 may exceed the URLFP or another restriction, which may, e.g., be stored in memory of OCU 22 or another device in communication with OCU 22, for flights of UAV 12. OCU 22 may automatically detect that the current location of the pilot, which may be assumed to correspond to the location of the OCU 22, is outside of the URLFP, e.g., by detecting the location of the OCU with a GPS included in the device or another device of ground station 14, determining distances between the location of the OCU and the boundary of flight area 34, and comparing the distances to the URLFP or other restricted airspace boundary. In response to determining the current location of the pilot is outside of the URLFP, a processor of OCU 22 (or a processor of another device) may automatically modify flight area 34 to ensure that, e.g., the entire boundary of the flight area 34 is within the URLFP and/or excludes other restricted airspace.

An example of such a modification to a selected flight area is illustrated FIG. 4. FIG. 4 illustrates an example GUI 46 generated by OCU 22 and presented via display 24 of OCU 22. GUI 46 displays a Class C Airspace 48, which may be airspace around an airport. Class C Airspace 48 may be, for example, defined by the government. In the example shown in FIG. 4, selected airspace 50 represents a 3D virtual containment space generated by a processor (e.g., a processor of OCU 22) based on user input defining a virtual boundary for flight of the UAV 12. OCU 22 (e.g., a processor of OCU 22) may be configured to compare the location of selected airspace 50 with a stored indication of the location of Class C Airspace and determine that area 52 of selected airspace 50 overlaps with the restricted Class C Airspace, in which UAV 12 is not permitted to fly per governmental regulations. In response to making such a determination, OCU 22 may adjust the virtual containment space of selected airspace 80 to generate a modified, authorized airspace 54 (also a virtual containment space), which does not include area 52 of selected airspace 50 and, thus, may comply with the governmental regulations. Modified airspace 54 may then become an approved operating area for UAV 12. In some examples, OCU 22 may generate a notification to the user that selected airspace 50 was modified, and may display the authorized airspace 54, e.g., alone or in conjunction with selected airspace 50, on GUI 46 for viewing and interaction with the user.

In some examples, OCU 22 may generate a flight plan based on the authorized airspace 54, e.g., in response to receiving user input approving the authorized airspace 54. On the other hand, if OCU 22 determines that selected airspace 50 does not overlap with a restricted airspace, OCU 22 may generate a flight plan based on selected airspace 50. In this manner, the UAV pilot or other user providing input to define a virtual boundary for flight of UAV 12 need not have specific knowledge or training with respect to FAA regulations on UAV range limits, as OCU 22 may be configured to automatically adjust a virtual containment space for UAV 12 to comply with any relevant rules and regulations. In one example, OCU 22 may also be configured to download current flight regulations from a remote database, e.g. via a local internet connection, in order to correctly execute the automated flight planning functions described in this application. Other special restrictions to the flight area may be automatically generated by OCU 22 as well. For example OCU 22 may automatically construct a boundary at a Class B airspace where the FAA has designated that no UAVs may fly. In some examples, OCU 22 may be configured to adjust or modify a virtual boundary defined by a user prior to generation of a virtual containment space based on the virtual boundary, instead of or in addition to modifying the virtual containment space itself.

After virtual boundaries (e.g., two- or three-dimensional boundaries) are defined by a user (e.g., a UAV pilot), OCU 22 may, in some examples, automatically generate an electronic flight plan based thereon. For example, OCU 22 may receive the user input defining a virtual boundary (which may be used to generate a virtual containment space) for flight of UAV 12, and may automatically input locations contained within the boundary or the containment space generated based on the boundary into a flight plan that may then be transmitted to an ATC system, e.g., via ATC tower 16 in example system 10 of FIG. 1. Flight locations employed by OCU 22 to automatically populate the flight plan may be defined in any of a number of different ways, including, e.g., those described above for defining a flight path, flight area, virtual boundary, and/or virtual containment space, e.g. flight areas 34, 40, 42, and 44, in the examples of FIGS. 2 and 3.

In one example, OCU 22 may convert the boundaries defined by the UAV pilot into GPS data before populating the flight plan and transmitting the plan to the ATC system via ATC tower 16. For example, as described in the above examples, the UAV pilot may define the flight locations, such as the 2D or 3D virtual boundaries, of UAV 12 graphically using display 24 of OCU 22. However, the ATC system may require flight locations for flight plans to be defined numerically, e.g., in terms of GPS location data. As such, OCU 22 may be configured to automatically convert the flight locations defined by the UAV pilot to GPS data by, e.g., transposing the flight path or area defined on map 32 on display 24 into a number or array of GPS data points representing the flight locations in terms of their absolute positions.

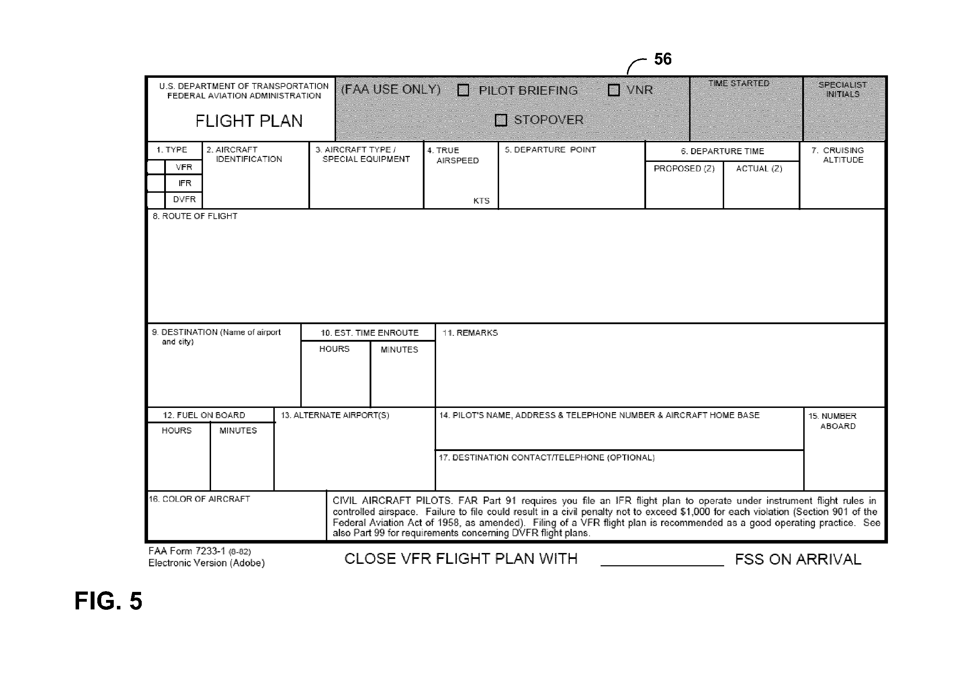

Flight plans are generally governed by FAA regulations and include the same information regardless of where the flight occurs or the type of aircraft to which the plan relates. An example flight plan 56 based on FAA Form 7233-1 is shown in FIG. 5. As illustrated in the example of FIG. 5, a flight plan may include pilot, aircraft, and flight information. For example, example flight plan 56 of FIG. 5 requires aircraft identification, type, maximum true air speed, and color, the amount of fuel and passengers on board the aircraft, as well as the name, address, and telephone number of the pilot operating the aircraft. Flight plan 56 also requires the type of flight to be executed, e.g. visual or instrument flight rules (VFR or IFR), or Defense Visual Flight Rules (DVFR), which refers to one type of flight plan that must be filed for operation within an Air Defense Identification Zone. Other information related to the flight on flight plan 56 includes the departure point and time, cruising altitude, route, and time of the flight.

Although some of the information required for flight plans depends on the particular flight being executed, e.g., the flight locations (such as virtual boundaries or a virtual containment space generated based on the virtual boundaries) of UAV 12 defined by the pilot using OCU 22, much of the information is repeated for different flights of the same aircraft by one or more of the same pilots. As such, in one example, parts of the flight plan automatically generated by OCU 22, e.g., according to example flight plan 56 of FIG. 5 may be pre-populated and, e.g., stored in memory of the OCU or another device in communication with the OCU in the form of one or more flight plan templates. For example, memory of OCU 22 may store a flight plan that includes pilot information, vehicle information, and/or standard flight information.

Referring again to example flight plan 56 of FIG. 5, in one example, OCU 22 stores a flight plan template for UAV 12 that includes aircraft information that does not change from one flight to another of UAV 12, including, e.g., the aircraft identification, e.g. the tail number of UAV 12, aircraft type, the true airspeed of UAV 12, the cruising altitude, which may be a default altitude at which UAV 12 is ordinarily operated, the fuel on board, color of UAV 12, the number of passengers aboard, i.e., zero for UAV 12. The pre-populated flight plan template stored on OCU 22 may also including information about the pilot of UAV 12, including, e.g., the pilot's name, address and telephone number, and aircraft home base.

OCU 22 may store multiple flight plan templates that vary based on different characteristics of the plan. For example, OCU 22 may store multiple flight plan templates for multiple pilots that may employ OCU 22 to operate UAV 12. In such examples, the pilot specific flight plan templates stored on OCU 22 may vary by including different pilot information pre-populated in each plan, e.g., the pilot's name, address and telephone number, and aircraft home base. In another example, OCU 22 may store multiple flight plan templates for different UAVs that may be operated using the OCU. In such examples, the vehicle specific flight plan templates stored on OCU 22 may vary by including different vehicle information pre-populated in each plan, e.g., the tail number, true airspeed, cruising altitude, fuel on board, color, the number of passengers aboard the UAV.

Some or all of the vehicle, flight, or pilot information described above as pre-populated in flight plan templates stored on OCU 22 may also, in some examples, be input by the pilot operating UAV 12. For example, the pilot may employ OCU 22 to input their own information into the flight plan automatically generated by the OCU. In one example, the pilot may be identified by logging into OCU 22, which in turn automatically populates the flight plan with information associated with the pilot login stored in memory of the OCU. In another example, the pilot may select their name from a drop down list, or other selection mechanism, of stored pilots displayed on display 24 of OCU 22, which, in turn, automatically populates the flight plan with information associated with the pilot's name stored in memory of the OCU. In another example, OCU 22 or ground station 14 may include equipment by which the UAV pilot may be identified and their information automatically added to the flight plan using biometrics, including, e.g., identifying the pilot by a finger or thumb print.

Information about the particular UAV, e.g., UAV 12 may be input into the flight plan by the pilot using OCU 22 in a similar manner as for pilot information in some examples. For example, the pilot may select a UAV, e.g. by tail number from a drop down list, or other selection mechanism of possible UAVs on display 24 of OCU 22, which, in turn, automatically populates the flight plan with information associated with the selected UAV stored in memory of the OCU.

In some examples, OCU 22 may automatically prompt (e.g., via a displayed GUI) the UAV pilot to input any information that is required to complete a flight plan. For example, the foregoing examples for inputting pilot, flight, and vehicle information may be automated by OCU 22 prompting the pilot to input any of this information not automatically filled in by the OCU. In this manner, the UAV pilot may provide the information necessary to generate a flight plan without having prior knowledge of flight plan content or requirements.

In addition to the foregoing examples of flight plan information generated, stored, or input on OCU 22, other information required for the plan may be generated or input at the time the pilot operates UAV 12 in a controlled airspace. Such real-time flight plan information, in addition to the flight locations which is described below, may either be automatically generated by OCU 22 or input by the pilot and includes, e.g., information about the time and the departure location of the flight. For example, as illustrated in example flight plan 56 of FIG. 5, the flight plan automatically generated by OCU 22 may require the departure and flight time for the flight of UAV 12 and the location from which the UAV will depart.

Some or all of this time and location information may be automatically generated by OCU 22. For example, OCU 22 may employ GPS onboard UAV 12 or within the OCU to determine the location from the UAV will depart on its flight. Additionally, in one example, OCU 22 may maintain a connection to the Internet or another network, e.g. cellular or satellite, by which the device may maintain the time of day according to some standardized mechanism. For example, OCU 22 may retrieve the time of day from via the Internet from the National Institute of Standards and Technology (NIST) Internet Time Service (ITS). In another example, OCU 22 may rely on the time of day supplied by a clock executed on the OCU. The estimated flight time, or estimated time enroute as it is designated in example flight plan 56 of FIG. 5, may be a default mission flight time pre-populated in a flight plan template or the pilot may employ OCU 22 to input an estimate of the flight time.

After automatically generating the flight plan based on the flight locations of UAV 12, OCU 22 may transmit the flight plan automatically or at the behest of the pilot to the ATC system, e.g., via ATC tower 16 of FIG. 1, to seek approval (e.g., from a governmental agency, such as the FAA) to fly in the controlled airspace. Electronically transmitting the flight plan to the ATC system may eliminate the step of physically delivering or otherwise manually filing a flight plan to ATC operators common in the past, which, in turn, may act to increase the rapidity with which the SWAT team, or other emergency response personnel, may respond to an emergency.

As described with reference to the example of FIG. 1, ATC tower 16 may be in wired or wireless communication with both UAV 12 and OCU 22 of ground station 14. OCU 22 may therefore transmit the flight plan to the ATC system via ATC tower 16 wirelessly or via the wired connection. The wireless communications between OCU 22 and ATC tower 16 may include any of a number of wireless communication technologies, including, e.g., cellular, wireless network, or satellite technologies. For example, wireless communications between OCU 22 and ATC tower 16 may be implemented according to one of the 802.11 specification sets, or another standard or proprietary wireless network communication protocol. In another example, OCU 22 may employ wireless communications over a terrestrial cellular network, including, e.g. a GSM (Global System for Mobile Communications), CDMA (Code Division Multiple Access), EDGE (Enhanced Data for Global Evolution) network to communicate with the ATC system via ATC tower 16.

Depending on the capabilities of the ATC system, the flight plan may be transmitted by OCU 22 in a number of different formats. For example, the flight plan may be transmitted by OCU 22 as a facsimile image that is configured to be received by a facsimile device of the ATC system, which, in turn, generates a hard copy of the flight plan for review and approval/denial by an air traffic controller. In another example, OCU 22 may transmit the flight plan as an electronic document including text and graphical information in any of a number of standard or proprietary formats, e.g., the OCU may transmit the flight plan to the ATC system in Portable Document Format (PDF). In such examples, the flight plan may include a graphical representation of the flight locations of UAV 12 for which approval is sought. For example, the flight plan transmitted by OCU 22 may include a representation of map 32 and flight area 34 illustrated on display 24 of the OCU in FIG. 2. In one example, OCU 22 may generate and transmit to the ATC a graphical image of flight area 34 overlaid on a sectional chart along with the other information associated with the flight plan. In one example, the ATC system may be capable of reconstructing of flight area 34 into a graphical representation from data transmitted by OCU 22 for overlay at the ATC to facilitate rapid ATC assessment of the request.

Regardless of the format, the ATC system may approve, deny, or modify the flight plan for UAV 12 transmitted by OCU 22. For example, an air traffic controller may receive and review the flight plan transmitted by OCU 22. In the event the flight plan and other conditions are satisfactory, the controller may transmit an approval message, e.g., via ATC tower 16 to OCU 22 indicating that the UAV pilot may begin operating UAV 12 in the controlled airspace. In some cases due to the flight plan or current conditions in the airspace, e.g., temporary additional restrictions or other flights currently being executed, the air traffic controller may deny the flight plan transmitted by OCU 22. In such cases, the controller may simply transmit a denial message back to OCU 22. In another example, however, the air traffic controller may modify the flight plan in order to approve a flight of UAV 12 in the controlled airspace. For example, the controller may transmit a conditional approval message including a modification of the flight locations for UAV 12 defined by the UAV pilot. In one example, approvals from the ATC may occur using a common electronic messaging technique, including, e.g. Simple Messaging Service (SMS) text messages or e-mail messages.

In some examples, the air traffic controller dynamically updates the flight plan for UAV 12 as the pilot flies UAV 12, and transmits the updated flight plan to OCU 22. In this way, OCU 22 may provide a communication interface with which the pilot may stay apprised of the most up-to-date flight plan approved by the ATC system.

In another example, the controller may modify the flight plan and send the modified plan back to OCU 22. For example, the ATC system may provide the air traffic controller with the capability of modifying an electronic document or other representation of the flight plan transmitted by OCU 22, e.g. by graphically modifying or redefining flight area 34 defined by the UAV pilot. The modified flight plan may then be sent back to OCU 22 (via the wired or wireless communication technique) and the UAV pilot may proceed with operating UAV 12 in the modified flight area 34.

In some examples, additional information related to the airspace of the flight of UAV 12 may be added to the flight plan automatically generated by OCU 22 and transmitted to the ATC system by OCU 22. One example of such additional information includes notice to air man (NOTAM) messages. A NOTAM is a temporary or permanent augmentation to the rules governing flights in an established controlled airspace. For example, there may be a NOTAM for a condemned or dangerous building located within a controlled airspace that further limits flights near the building. In the examples disclosed herein, NOTAMS may be added to an airspace based on an automatically generated flight plan or communicated to a UAV pilot before approving the flight plan in the airspace.

In one example, along with the flight plan automatically generated by OCU 22, the OCU may generate and transmit a NOTAM to the ATC system which indicates that the flight locations defined by the UAV pilot will be occupied by a vehicle in flight if the plan is approved. Such a NOTAM generated and transmitted by OCU 22 may be automatically added to the controlled airspace by the ATC system for future flight plans that are requested. In another example, the ATC system may transmit any relevant NOTAMs that already exist in the airspace to OCU 22 with an unconditional or conditional approval of the flight plan. For example, an air traffic controller may provide conditional approval of flight area 34 defined by the UAV pilot provided the pilot restricts flight around a particular condemned building within the flight area in accordance with an existing NOTAM in the airspace, e.g. such as NOTAM 38 in flight area 34 in FIG. 2.

At any time after an initial approval of a flight plan automatically generated by OCU 22, the UAV pilot may modify or amend and retransmit the changed plan to the ATC system for approval. For example, the UAV pilot, due to conditions on the ground and information gleaned from an initial flight of UAV 12, may wish to expand flight area 34 or otherwise change the flight locations for the UAV. As such, the pilot may modify flight area 34, e.g., by drawing a different area or stretching the previously defined area on display 24 of OCU 22. OCU 22 may then automatically generate an updated flight plan based on the new flight locations for UAV 12 defined by the UAV pilot and transmit the updated flight plan to the ATC system for approval.

The above examples of FIGS. 1 and 2 have been described with reference to example OCU 22 of ground station 14. However, in other examples according to this disclosure, a UAV pilot at a ground station may employ different types of OCUs. For example, a UAV pilot may employ an OCU that includes glasses or goggles worn by the pilot and that display representations of the flight locations of the UAV and the in-flight video feed from the UAV video camera by which the pilot flies the vehicle. Such an OCU may also include a standalone control stick, e.g., a joy stick that the pilot may use to define the flight locations of the UAV on the display of the glasses/goggles and control the trajectory of the vehicle in flight.

FIG. 6 is a block diagram illustrating components and electronics of example OCU 22 of FIG. 2, which includes processor 58, memory 60, display 24, user interface 62, telemetry module 64, and power source 66. Processor 58, generally speaking, is communicatively connected to and controls operation of memory 60, display 24, user interface 62, and telemetry module 64, all of which are powered by power source 66, which may be, for example, rechargeable in some examples. Processor 58 may include any one or more of a microprocessor, a controller, a digital signal processor (DSP), an application specific integrated circuit (ASIC), a field-programmable gate array (FPGA), or equivalent discrete or integrated logic circuitry. The functions attributed to processor 58 (as well as other processors described herein) in this disclosure may be embodied as software, firmware, hardware and combinations thereof. Although example OCU 22 of FIG. 6 is illustrated as including one processor 58, other example devices according to this disclosure may include multiple processors that are configured to execute one or more functions attributed to processor 58 of OCU 22 individually or in different cooperative combinations.

Memory 60 stores instructions for applications and functions that may be executed by processor 58 and data used in such applications or collected and stored for use by OCU 22. For example, memory 60 may store flight plan templates employed by processor 58 to automatically generate flight plans based on the flight locations of UAV 12 defined by the UAV pilot. As another example, memory 60 may store pilot information, UAV information, different maps for use by a pilot or another user to define a flight location, definitions of one or more restricted air spaces, and other governmental restrictions and regulations. Memory 60 may be a computer-readable, machine-readable, or processor-readable storage medium that comprises instructions that cause one or more processors, e.g., processor 58, to perform various functions. Memory 60 may include any volatile, non-volatile, magnetic, optical, or electrical media, such as a random access memory (RAM), read-only memory (ROM), non-volatile RAM (NVRAM), electrically-erasable programmable ROM (EEPROM), flash memory, or any other digital media. Memory 60 may include instructions that cause processor 58 to perform various functions attributed to the processor in the disclosed examples.

Memory 60 includes memory that stores software that may be executed by processor 58 to perform various functions for a user of OCU 22, including, e.g., generating flight plans based on one or more flight locations for UAV 12 defined by a pilot, e.g., the UAV pilot and operating the UAV in flight. The software included in OCU 22 may include telemetry, e.g. for communications with an ATC system via ATC tower 16, and other hardware drivers for the device, operating system software, and applications software. In some examples, the operating system software of OCU 22 may be, e.g., Linux software or another UNIX based system software. In another example, OCU 22 may include proprietary operating system software not based on an open source platform like UNIX.

Operation of OCU 22 may require, for various reasons, receiving data from one or more sources including, e.g., an ATC system via ATC tower 16, as well as transmitting data from the device, e.g., flight plans or flight control signals to one or more external sources, which may include the ATC system and UAV 12, respectively. Data communications to and from OCU 22 may therefore generally be handled by telemetry module 64. Telemetry module 64 is configured to transmit data/requests to and receive data/responses from one or more external sources via a wired or wireless network. Telemetry module 64 may support various wired and wireless communication techniques and protocols, as described above with reference to communications between OCU 22 and ATC tower 16, and includes appropriate hardware and software to provide such communications. For example, telemetry module 64 may include an antenna, modulators, demodulators, amplifiers, compression, and other circuitry to effectuate communication between OCU 22 and ATC tower 16, as well as UAV 12, and local and remote terminals 18 and 20, respectively.

OCU 22 includes display 24, which may be, e.g., a LCD, LED display, e-ink, organic LED, or other display. Display 24 presents the content of OCU 22 to a user, e.g., to the UAV pilot. For example, display 24 may present the applications executed on OCU 22, such as a web browser, as well as information about the flight plan for and operation of UAV 12, including, e.g., PIP first person window 36 illustrated in FIG. 2. In some examples, display 24 may provide some or all of the functionality of user interface 62. For example, display 24 may be a touch screen that allows the user to interact with OCU 22. In one example, the UAV pilot defines flight locations (e.g., one or more virtual boundaries, which may be, e.g., 2D or 3D) for UAV 12 by drawing or otherwise inputting the locations on display 24. For example, the pilot defines flight locations for UAV 12 by drawing flight area 34, or flight areas 40, 42, or 44, within which the vehicle is expected to fly in the execution of a mission. In any event, user interface 62 allows a user of OCU 22 to interact with the device via one or more input mechanisms, including, e.g., input buttons 26, control stick 28, an embedded keypad, a keyboard, a mouse, a roller ball, scroll wheel, touch pad, touch screen, or other devices or mechanisms that allow the user to interact with the device.

In some examples, user interface 62 may include a microphone to allow a user to provide voice commands. Users may interact with user interface 62 and/or display 24 to execute one or more of the applications stored on memory 60. Some applications may be executed automatically by OCU 22, such as when the device is turned on or booted up or when the device automatically generates a flight plan for UAV 12 based on the flight locations for the vehicle defined by the pilot. Processor 58 executes the one or more applications selected by a user, or automatically executed by OCU 22.

Power source 66 provides power for all if the various components of OCU 22, and may be rechargeable. Examples of power source 66 include a lithium polymer battery, a lithium ion battery, nickel cadmium battery, and a nickel metal hydride battery.

Processor 58 is configured to operate in conjunction with display 24, memory 60, user interface 62, and telemetry module 64 to carry out the functions attributed to OCU 22 in this disclosure. For example, the UAV pilot may draw one or more flight locations for UAV 12 on touchscreen display 24 of OCU 22 using, e.g., one of the pilot's finger or with a stylus. Processor 58 may then automatically generate a flight plan based on the flight locations for UAV 12.

In one example, the pilot may input additional information, including, e.g., flight, vehicle, and pilot information via display 24 and/or user interface 62 of OCU 22. Processor 58 may receive this data from the pilot and add the data to a flight plan template stored on memory 60 or a new flight plan generated by processor 58. Processor 58 may also interact with one or more software or hardware components to automatically generate flight plan information in addition to the flight locations of UAV 12. For example, processor 58 may access and execute a clock application stored on memory 60 or a remote device to determine the departure time for the flight of UAV 12. Processor 58 may also access GPS software and/or hardware included in OCU 22 or a remote device to determine the departure location for the flight of UAV 12.

In one example, processor 58 may execute an algorithm, e.g., stored on memory 60, that converts the flight locations for UAV 12 defined graphically on display 24 into GPS data. Processor 58 may then add the GPS data based flight locations to the flight plan for UAV 12. For example, processor 58 may execute an algorithm stored on memory 60 that transposes the flight path or area defined on display 24 by the UAV pilot into an array of GPS data points representing the flight locations of UAV 12 in terms of absolute positions.

After generating the flight plan, processor 58 may interact with and/or control telemetry module 64 to transmit the plan to an ATC system, e.g. via ATC tower 16, via a wired or wireless communication line. Processor 58 and telemetry module 64 may also function separately or in conjunction with one another to receive flight plan approvals, denials, and modifications from the ATC system via ATC tower 16.

Processor 58 may also execute additional functions attributed to OCU 22 in the examples described above with reference to FIG. 2. For example, processor 58 may generate, receive, and interpret NOTAMs for the controlled airspace within which UAV 12 is operating and may, in some examples, operate in conjunction with telemetry module 64 to transmit a NOTAM related to a flight plan automatically generated by the processor to the ATC system. Additionally, processor 58 may handle any modifications or amendments made to a flight plan previously approved, as well as communications with and processing of approvals for the changes from the ATC system.

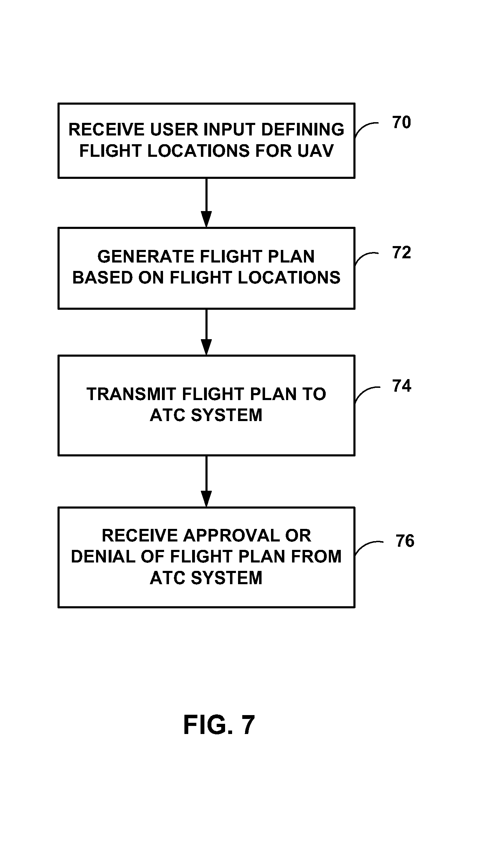

FIG. 7 is a flow chart illustrating an example method of automatically generating and filing a flight plan for a UAV in a controlled airspace. The example method of FIG. 7 includes receiving user input defining one or more flight locations for a UAV (70), automatically generating an electronic flight plan based on the one or more flight locations for the UAV (72), and transmitting the flight plan to an ATC system (74). In some examples, the method of FIG. 7 also includes receiving an approval or denial of the flight plan from the ATC system (76). In examples described herein, the method of FIG. 7 for generating and filing UAV flight plans is described as being executed by example OCU 22. However, in other examples, the functions associated with the method of FIG. 7 may be executed by other operator control units associated with a ground station for a UAV, which may be configured differently and employed on different UAVs, or associated with other devices. For example, an alternative operator control unit may include goggles including an electronic display worn by a UAV pilot and a standalone control stick employed by the pilot to define flight locations for the UAV and control the vehicle in flight.

The method of FIG. 7 includes receiving user input defining one or more flight locations for a UAV (70). For example, the UAV pilot may draw one or more flight locations, e.g., one or more virtual boundaries, for UAV 12 on touch-screen display 24 of OCU 22 using, e.g., one of the pilot's finger, with a stylus, or another input mechanism (e.g., a peripheral pointing device). In the example of FIG. 2, the flight locations of UAV 12 have been defined by drawing flight area 34 on touch-screen 24 of OCU 22, which represents the locations the UAV is expected to fly in the execution of the team mission. In another example, however, instead of defining the flight locations as flight area 34, the UAV pilot may draw a flight path along or about which UAV 12 is expected to fly on touch-screen display 24 of OCU 22 to define the flight locations of the UAV. In other examples, a user of OCU 22, e.g. the UAV pilot may define the flight locations of UAV 12 in a different manner. For example, in a mission in which emergency personnel activities will be limited to a single building or other landmark, a user may simply select a building or landmark on map 32 around which and within which UAV 12 is expected to fly.

In some examples, OCU 22, e.g., processor 58, generates a 3D virtual containment space illustrating a flight location for the UAV 12, based on the input (defining the flight locations) from the user. The 3D virtual containment space may define a 3D space within which UAV 12 can fly.

In some examples, OCU 22, e.g., processor 58, may automatically limit the flight locations of UAV 12 defined by the UAV pilot, e.g., based on a UAV range limit to PIC (URLFP) prescribed by the FAA (or other governmental agency). In one example, the UAV pilot may draw flight area 34, or flight areas 40, 42, or 44, on touch-screen 24 of OCU 22, which represents the locations the UAV is expected to fly in the execution of the SWAT team mission. However, some or all of the boundary flight areas 34, 40, 42, or 44 may exceed the URLFP, which may, e.g., be stored in memory 60 for flights of UAV 12. In one example, processor 58 automatically detects that the current location of the pilot, which may be assumed to correspond to the location of OCU 22, is outside of the URLFP by, e.g., detecting the location of the OCU with a GPS included in the device or another device of ground station 14, determining distances between the location of the OCU and the boundary of flight area 34, and comparing the distances to the URLFP. As such, processor 58 of OCU 22 may automatically modify flight areas 34, 40, 42, or 44 to snap some or the entire boundary of the area to within the URLFP, or otherwise automatically limit flight area 34, 40, 42, or 44 to URLFP.

In addition to defining the flight locations for UAV 12 (70), the method of FIG. 7 includes automatically generating a flight plan based thereon (72). For example, processor 58 of OCU 22 may receive the flight locations for UAV 12 defined by the UAV pilot and automatically input the locations into a flight plan that may then be transmitted to an ATC system, e.g., via ATC tower 16 in example system 10 of FIG. 1. The flight locations employed by OCU 22 to populate the flight plan may be defined in any of a number of different ways, including, e.g., those described above for defining a flight path, flight area, virtual boundary, or virtual containment space, e.g., flight areas 34, 40, 42, and 44. Additionally, in some examples, processor 58 may execute an algorithm, e.g., stored on memory 60 (FIG. 6) that converts the flight locations for UAV 12 defined graphically on display 24 into GPS data. Processor 58 may then add the GPS data based flight locations to the flight plan for UAV 12.

Although some of the information required for a flight plan depends on the particular flight being executed, e.g., the flight locations of UAV 12 defined by the pilot using OCU 22, other types of information may be repeated for different flights of the same aircraft by one or more of the same pilots. As such, in one example, parts of the flight plan automatically generated by processor 58 of OCU 22, e.g., according to example flight plan 56 of FIG. 5 may be pre-populated and, e.g., stored in memory 60 in the form of one or more flight plan templates. For example, memory 60 of OCU 22 may store a flight plan that includes pilot information, vehicle information, and/or standard flight information. OCU 22, and, in particular, memory 60 may store multiple flight plan templates that vary based on different characteristics of the plan, including, e.g. different pilots that operate a UAV and different UAVs that are operated by one or more pilots. Some or all of the vehicle, flight, or pilot information described as pre-populated in flight plan templates on memory 60 of OCU 22 may also, in some examples, be input by the pilot operating UAV 12.

In addition to the foregoing examples of flight plan information generated by processor 58, stored on memory 60, and/or input by display 24 and/or user interface 62, other information required for the plan may be generated or input at the time the pilot operates UAV 12 in a controlled airspace. Such real-time flight plan information, in addition to the flight locations which is described below, may either be automatically generated by, e.g., processor 58 of OCU 22 or input by the pilot and includes, e.g., information about the time and the departure location of the flight. By eliminating or at least reducing the requirement for the user to directly fill out a FAA flight plan form in some examples, OCU 22 may provide a more user friendly interface with which the user may generate a flight plan, and may ease the level of skill or knowledge required to generate a flight plan and file the flight plan with an ATC system.

In addition to automatically generating the flight plan based on the flight locations of UAV 12 (72), in the method of FIG. 7, processor 58, e.g., with the aid of telemetry module 64, of OCU 22 transmits the flight plan automatically or at the behest of the pilot to the ATC system (74), e.g., via ATC tower 16 of FIG. 1, to seek approval to fly in the controlled airspace. In some examples, processor 58 may control telemetry module 64 of OCU 22 to wirelessly transmit the flight plan to the ATC system via ATC tower 16 in accordance with any of a number of wireless communication technologies, including, e.g., cellular, wireless network, or satellite technologies. In other examples, processor 58 may be in communication with the ATC system via a wired link. The flight plan may be transmitted by processor 58 and/or telemetry module 64 of OCU 22 in a number of different formats, depending on the capabilities and limitations of the ATC system.

In some examples, after transmitting the flight plan to the ATC system (94), OCU 22 may receive a conditional or unconditional approval or a denial of the flight plan from the ATC system (76). For example, processor 58 may interact with and/or control telemetry module 64 to wirelessly transmit the plan to an ATC system, e.g., via ATC tower 16. Processor 58 and telemetry module 64 may then also function separately or in conjunction with one another to receive flight plan approvals, denials, and modifications from the ATC system via ATC tower 16.

In some examples, the method of FIG. 7 may include additional functions executed by OCU 22, or another device or system. In one example, the method of FIG. 7 further includes the generation and transmission of one or more NOTAMs between OCU 22 and the ATC system. For example, processor 58 may generate, receive, and interpret NOTAMs for the controlled airspace within which UAV 12 is operating and may, in some examples, operate in conjunction with telemetry module 64 to transmit a NOTAM related to a flight plan automatically generated by the processor to the ATC system. In another example, the example method of FIG. 7 may include modifying a flight plan based on, e.g., additional or different flight locations for UAV 12 and transmitting the flight plan to the ATC system for approval. For example, processor 58, alone or in conjunction with telemetry module 64 may handle any modifications or amendments made to a flight plan previously approved, as well as communications with and processing of approvals for the changes from the ATC system.

When a UAV is flown in national airspace, the UAV manufacturer and operator may need to comply with the same or similar regulatory and safety requirements applied to manned aircraft. In addition, because the UAV Pilot-In-Control (PIC) is not on-board, additional concerns may be raised regarding the situational sensing and reaction of the PIC. In some examples, in addition to or instead of the flight plan generation techniques described above, OCU 22 may be configured to provide one or more features that may be used during flight planning, during flight of the UAV, or both, to help increase the compliance with regulatory and safety requirements, as well as to help reduce any concerns that may be associated with flying a UAV in national airspace.

In some examples, OCU 22 may be configured to provide a user with one or more flight planning aids, which may provide the user (e.g., an operator or a pilot) with a better understanding of airspace classifications and boundaries. The flight planning aids may include maps, such as map 32, which may be any one or more of a 3D rendering of an air space, where the rendering may include a street map, depictions of geographical or man-made landmarks (e.g., buildings), depictions of any other visual obstacles or points of interest (fixed or moving), or any combination thereof. Processor 58 of OCU 22 may be configured to generate and present a rendering of the air space and flight path rendering in 3D.

In addition, in some examples, e.g., as described below, the flight planning aids provided by OCU 22 may include current and/or projected weather patterns, air or ground vehicle traffic information, information from the relevant air traffic control (ATC), information about population in one or more regions in which the UAV will be flown, and event gatherings.

OCU 22 may be configured to generate flight paths relatively fast, and, in some examples, automatically adjust boundaries based on stored airspace data, a response from ATC about a submitted flight plan, incidents, or other relevant parameters that may affect the flight boundaries for a UAV.

The flight planning aids provided by OCU 22 may help a pilot or other user execute a flight plan in compliance with regulated airspaces. For example, OCU 22 may define a virtual containment space (e.g., the selected airspace 50 or authorized airspace 54 shown in FIG. 4) based on user input defining one or more virtual boundaries, and may automatically control, or control with the aid of a pilot, UAV 12 to fly within the virtual boundary. The virtual containment space may also be referred to as a virtual fence, in some examples, and may be multidimensional.

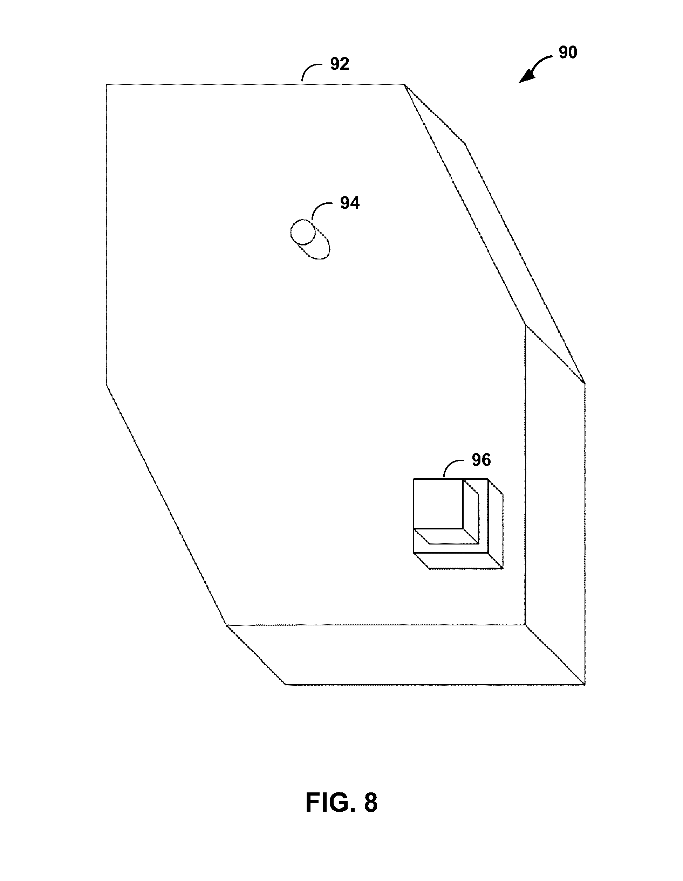

In some examples, e.g., as shown in FIG. 8, an authorized airspace 90 (also referred to herein as an "operating area" or virtual containment space, in some examples) may include a virtual boundary 92 defined by the outer perimeter of the graphical representation of authorized airspace 90. Three-dimensional authorized airspace 90 may be a 3D virtual containment space that is generated, at least in part, based on user input from a user interacting with user interface 62 of OCU 22 defining a virtual boundary, such as virtual boundary 92. Virtual boundary 92 may be, e.g., 2D or 3D. That is, a user may define virtual boundary 92 in two dimensions or in three dimensions. In some examples, a processor, e.g., processor 58 of OCU 22, generates authorized airspace 90 as a 3D virtual containment space on a GUI, such that a user (e.g., a pilot of UAV 12) may interact with a graphical representation of authorized airspace 90.

In some examples, OCU 22 may define one or more virtual boundaries 94, 96 within authorized airspace 90. Virtual boundaries 94, 96 may represent restricted airspace within virtual boundary 92 within which UAV 12 may not fly. For example, virtual boundaries 94, 96 may represent physical obstacles, such as buildings, cell phone towers, and the like, within area 90 or boundary 92 into which UAV 12 should not fly. The virtual boundaries 94, 96 may each define a 3D volume of space, in some examples. As shown in the example of FIG. 8, OCU 22 (e.g., processor 58 of OCU 22) may generate authorized airspace 90 such that authorized airspace 90 excludes the airspace within virtual boundaries 94, 96.

In some examples, authorized airspace 90 (defined based on virtual boundaries 92, 94, 96) may be used to actively control flight of UAV 12. For example, OCU 22, alone or with the aid of a pilot, may control UAV 12 to hover or move away from virtual walls defining authorized airspace 90 in response to detecting (e.g., based on sensors on board UAV 12 or sensors external to UAV 12) that UAV 12 is within a predetermined threshold distance of walls of authorized airspace 90. In some examples, UAV 12 is configured to execute a flight path based on a 3D virtual containment space (which may be generated by OCU 22 based on the virtual boundary), such as authorized airspace 90, and may autonomously execute the flight path based on the D virtual containment space. For example, a processor on board UAV 12 may be configured to determine the proximity to a wall of a virtual containment space and control the flight of UAV 12 to avoid UAV 12 crossing into or out of the virtual containment space (depending upon the desired region in which UAV 12 is to fly). In this way, the virtual containment space generated by OCU 22 may be used for closed-loop or pseudo-closed-loop control of UAV 12 flight.

As one example of OCU 22 modifying or generating a flight path based on a 3D virtual containment space, processor 58 of OCU 22 may define a flight path track and a flight path corridor boundary that defines a permissible deviation tolerance relative to the planned path, as discussed in further detail below. As another example, processor 58 may define a flight region or area in 3D space (e.g., any suitable 3D shape, such as a sphere, box, polygon, tube, cone, etc.) within which the UAV may operate in an ad hoc manner.

Processor 58 of OCU 22 may receive user input defining a virtual boundary, and may generate a 3D virtual containment space using any suitable technique. In some examples, processor 58 receives input from a user, such as a pilot of UAV 12, that defines a virtual boundary (e.g., a two- or three-dimensional boundary defined by the user), and processor 58 may modify the virtual boundary based on, e.g., restricted airspace, known obstacles, warrant parameters, and the like. In some examples, processor 58 defines a 3D virtual containment space based on latitude, longitude, and altitude points or GPS positions. Instead or in addition, processor 58 may define a 3D virtual containment space based on relative points, such as distances relative to one or more features or based on inertial sensor values (from an inertial sensor on board the UAV) or other on board navigation systems.

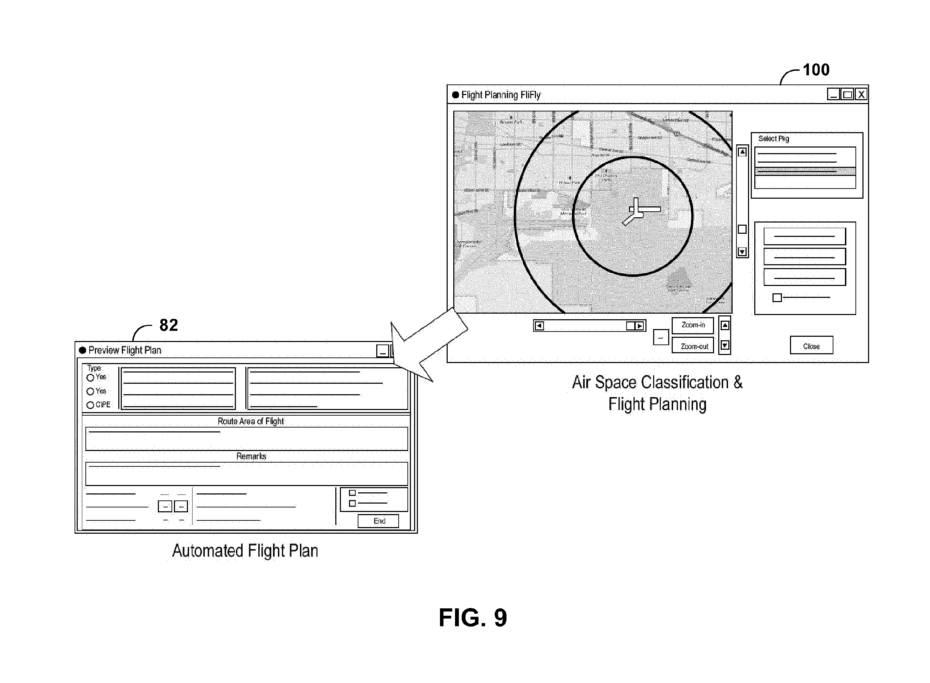

FIG. 9 illustrates an example GUI 100 that processor 58 of OCU 22 may generate and present to a user via display 24. Processor 58 may receive user input (e.g., from the pilot of UAV 12 or from another user) via GUI 100, where the user input may be used to provide at least some information used by processor 58 to generate flight plan 82, e.g., in accordance with the technique described with respect to FIGS. 2 and 7. GUI 100 may provide an overview of an airspace in which UAV 12 may be flown, e.g., may be the area of desired operation of UAV 12.

Memory 60 of OCU 22 may store data that defines airspace information or other airspace restrictions, and processor 58 may retrieve the airspace information used to generate GUI 100 from memory 60. The data that defines airspace information may be in the form of FAA or other service provided digital sectional charts. A user may interact with GUI 100 to define a flight location, e.g., a virtual boundary that defines an outer boundary of operation or a flight path desired for UAV on top of the airspace map displayed by GUI 100 (e.g., via a stylus, mouse, or other input mechanism). As described above, this input may be used by processor 58 to autonomously generate the necessary data for an electronic flight plan filing system (e.g., referred to herein as an "eFileFly system" in some examples).

Processor 58 may provide additional 3D information regarding the airspaces in the desired area of operation or the desired flight path for UAV 12 to assist the user in defining a 2D or 3D virtual boundary for flight of UAV 12. FIG. 10 illustrates the characteristics of certain approved airspaces as a function of altitude. The approved airspaces may be defined by, for example, the U.S. FAA or by another governmental agency, and may differ depending on the country, state, or region in which UAV 12 is flown. Processor 58 may store the characteristics of the approved airspaces in memory 60 of OCU 22 or a memory of another device (e.g., a remote database). In some examples, processor 58 selects an approved airspace from memory 60 based on input from a user selecting the region or defining a virtual boundary in which UAV 12 is to be flown. In some examples, after generating a flight plan, e.g., based on user input as described above with respect to FIG. 7, processor 58 may auto adjust a generated flight plan to fit within the selected approved operating airspace for UAV 12.

In some examples, processor 58 may generate and present a GUI, e.g., via display 24, that includes a depiction of the different airspaces shown in FIG. 10. Such a GUI may help the user visualize the different airspace restrictions that factor into generating a flight plan and defining a flight path or flight space. Once a flight plan is generated, processor 58, or a user interacting with OCU 22, may examine the flight plan in three dimensions (e.g., a user may rotate the airspace manually) relative to the airspace definitions in order to confirm the boundaries of the flight location (e.g., the flight space or flight path) defined by the flight plan are within the boundaries of the approved airspaces. In some examples, the GUI may display one or more 3D virtual containment spaces, generated by processor 58 based on user input, within which the UAV 12 must remain during the flight (e.g., in order to comply with airspace restrictions), and the user may determine whether the flight location (e.g., the flight space or flight path) remains within the virtual containment space(s) based on the display. In some examples, the user may provide input, via the GUI, modifying the flight location (e.g., the flight space or flight path) based on viewing the 3D virtual containment space. In other examples, processor 58 may automatically modify the flight location to comply with airspace restrictions.

In response to determining that the flight path or flight space fits within the boundaries of the approved airspace, processor 58 may generate the flight plan (e.g., as described with respect to FIG. 7) and then transmit the flight plan to the FAA for filing. As the capabilities expand in this arena, the FAA may have the ability to also review the flight plan in three dimensions and make adjustments before it is returned to the user of OCU 22 as a final approved plan.

In some examples, as described above, a virtual boundary that may be used to control the flight of UAV 12 may be defined by a user and may be automatically adjusted by processor 58 of OCU 22 (or manually adjusted by a user) based on information regarding, for example, restricted airspaces or obstacles. In addition to or instead of these types of flight area restrictions, processor 58 may be configured to generate a flight plan based on limited surveillance boundaries. The limited surveillance boundaries may, in some examples, be defined by a user, a governmental agency, or another third party, and stored by memory 60 of OCU 22. Processor 58 may access the information regarding the limited surveillance boundaries in order to generate a flight plan that complies with the limited surveillance boundaries.

The limited surveillance boundaries can be defined to limit the flight of UAV 12, e.g., to areas outside the surveillance boundaries. For example, the limited surveillance boundaries may define an area in which aerial surveillance should not be performed, such that the limited surveillance boundaries may help prevent UAV 12 from surveying certain areas, e.g., areas in which there is limited cultural acceptance of aerial surveillance, populated areas, and areas experiencing poor weather conditions. In some examples, the limited surveillance boundaries may be overridden by an authorized user of OCU 22, e.g., if the areas to be surveyed are approved by a warrant or by an urgent need that overrides privacy concerns.

In some examples, the limited surveillance boundaries may define the space in which UAV 12 may only fly. For example, the limited surveillance boundaries may be defined by a warrant. In these examples, prior to submitting a flight plan, processor 58 of OCU 22 may confirm that the flight locations (e.g., the flight path or flight space defined by a virtual boundary input by a user) within the limited surveillance boundaries are not within a restricted airspace. Instead of or in addition to being used to generate a flight plan, a limited surveillance area inputted into OCU 22 may be used to control the flight of UAV 12, as well as to control sensors aboard UAV 12. For example, the limited surveillance boundary can be used to limit gimbaled camera searches and the surveillance area boundary can be used as the virtual fence boundary for the UAV flight operations.

In some examples, a user (e.g., the pilot of UAV 12) may be aware of the limited surveillance boundaries, and may provide user input to a user interface defining a 2D or 3D dimensional virtual boundary based on the limited surveillance boundaries. For example, the user may view the limited surveillance boundaries on a GUI, e.g., displayed on display 24, and may subsequently provide input defining a virtual boundary within which or outside of which UAV 12 may fly, based on viewing the limited surveillance boundaries. A processor, e.g., processor 58, may generate a GUI including a 3D virtual containment space based on the user's input, such that the 3D virtual containment space takes into account the limited surveillance boundaries. For example, the processor may generate the 3D virtual containment space included in the GUI to include or exclude the area defined by the limited surveillance boundaries, depending upon the particular parameters of the boundaries.

Processor 48 of OCU 22 may automatically, or with the aid of user input, generate a flight plan based on user input and information regarding limited surveillance boundaries. In some examples, processor 58 uploads the flight plan to UAV 12, and the avionics aboard UAV 12 may control flight of UAV 12 based on the flight plan, e.g., to control UAV 12 to fly within the virtual "walls" defined by the virtual containment space, or to stay outside the virtual "walls" defined by the virtual containment space. As UAV 12 nears the walls of the 3D virtual containment space, (e.g. as indicated by GPS data or relative location data, such as cell phone tower triangulation, ground feature identification, data from inertial sensors onboard UAV, or other location information), processor 58 may generate a notification or alert to the pilot (or another user) that UAV 12 is nearing the unapproved flight area, or is nearing a wall of the 3D virtual containment space. UAV 12 may be configured in some examples such that, if no action is taken by the pilot within a specified distance range of the wall(s) of the virtual containment space, avionics of UAV 12 (e.g., controlled by an onboard processor, processor 58, or another processor) itself will autonomously avoid the wall(s) of a 3D virtual containment space, which may include an established ceiling, established walls, and the like, by stopping flight in that direction. This control of UAV 12 flight may be performed through a guidance function hosted either on UAV 12, OCU 22, or both, and implemented by software, firmware, hardware, or any combination thereof.

In some examples, a user (e.g., a pilot of UAV 12) may define a flight path for UAV 12 as a single line of flight, e.g., by drawing a single line on a GUI defining the flight path. Although many of the virtual boundaries described herein are closed loop spaces (e.g., as illustrated in FIGS. 2 and 3A-3C), in some examples a user-defined flight path as a single line of flight may be considered user input defining a virtual boundary. Based upon the user input defining the flight path for the UAV, a processor of the system (e.g., processor 58 of OCU 22) may generate a 3D virtual containment space, e.g., by adding longitude, latitude, and/or altitude components. The processor may, in some examples, define the 3D virtual containment space based on predetermined flight corridor parameters that may define a specified range or distance from the flight path (e.g., the single line of flight) within which the UAV 12 is allowed to fly. In this way, the processor may generate a more concrete representation of the particular space within which or outside of which the UAV 12 can fly.

Similar to a UAV operating within a specified operational area, a virtual containment space defined by processor 58 of OCU 22 (e.g., based on user input defining a flight path for UAV 12) may be used to control flight of UAV 12 in transit from one point to another. In this case, OCU 22 may define a virtual containment space based on a flight plan, where the virtual containment space may define a 3D corridor. The corridor may define a 3D space in which UAV 12 may permissively fly, e.g., to comply with the relevant governmental regulations, to avoid one or more obstacles (e.g., physical obstacles or weather), and the like.

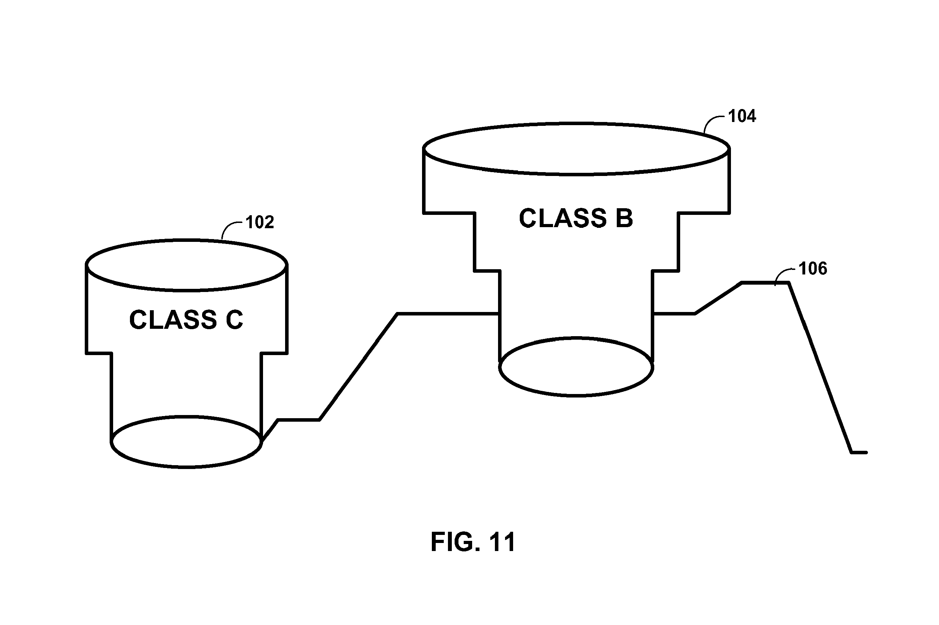

During flight planning, a flight path specified by a user interaction with OCU, e.g., by drawing on displayed map 32, may provide lateral information that is used to define the virtual containment space. In some examples, the user may define a vertical component of the flight path using a 2D view of an airspace, e.g., as shown by flight path 106 in FIG. 11. The GUI shown in FIG. 11, which may be generated by processor 58 and presented on display 24, may also include overlaid information, such as information defining restricted airspace classes (e.g., restricted Class C airspace 102 and restricted Class B airspace 104) and information regarding obstacles, so that the user may visualize the restrictions in the vertical (altitude relative to ground) direction, as well as in the lateral direction. A user may interface with the GUI shown in FIG. 11 in order to define a flight path, such as flight path 106, a flight area, or other flight location.

Processor 58 of OCU 22 may be configured to generate a display that includes the virtual boundary overlaying map 32, as well as overlaying other information, such as restricted airspaces, weather (e.g., weather fronts, wind speeds and direction, and the like) obstacle patterns, approach patterns, and the like. In some examples, processor 58 may present the user with a GUI that enables the user to select the information (e.g., virtual boundary outline, restricted airspaces, weather (e.g., weather fronts, obstacle patterns, approach patterns, and the like) to be overlaid on map 32 and processor 58 may generate the display based on the user input.

The display generated by processor 58 may be configured to be 3D, and a user may interact with display 24 of OCU 22 (e.g., via user interface 54) in order to view the defined flight corridor (e.g., generated as a 3D virtual containment space) from a plurality of different angles. The user may use the display to, for example, confirm that the defined flight corridor does not overlap with any restricted airspace, is within an approved flight area, and the like. In other examples, processor 58 may automatically confirm that the defined flight corridor does not overlap with any restricted airspace, is within an approved flight area, and the like.

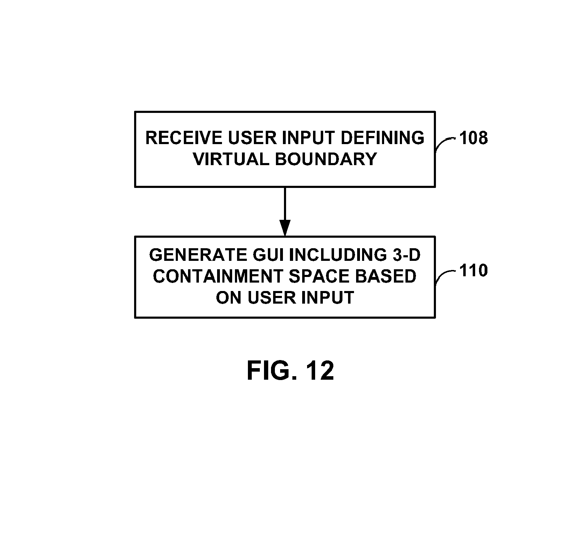

FIG. 12 illustrates an example method for generating a GUI that includes a 3D virtual containment space for flight of a UAV, such as UAV 12. As discussed above, in some examples, a GUI that includes a rendering of a 3D virtual containment space for flight of a UAV may be useful for enhancing safety and accuracy of the flight of the UAV. For example, a GUI that includes (e.g., illustrates) a 3D virtual containment space may allow a user (e.g., a UAV pilot) to more specifically identify the location of the UAV, and to determine whether the UAV is remaining within desirable airspace or is entering undesirable airspace (e.g., restricted airspace). While FIG. 12, as well as many of the other figures, are described with respect to processor 58 of OCU 22, in other examples, a processor of another device, alone or in combination with processor 58 or another processor, may perform the technique shown in FIG. 12.

According to the method of FIG. 12, processor 58 receives user input (e.g., via a user interface such as user interface 62 of OCU 22 or another component) defining a virtual boundary for flight of UAV 12 (108) and processor 58 generates a GUI including a 3D virtual containment space for flight of UAV 12 based on the user input defining the virtual boundary (110).

In some examples, as described herein, the user may be a pilot of the UAV 12. The user may provide user input defining a virtual boundary according to any suitable technique, such as interacting with user interface 62 with a finger, a stylus, a keyboard, and the like. The virtual boundary may, in some examples, be a single line that defines a flight path of the UAV. In other examples, the virtual boundary may illustrate or define a 2D space or a 3D enclosed space within which or outside of which the UAV must remain. In some examples, the user input may define a virtual boundary that defines a 3D space, e.g., by including latitude, longitude, and altitude components, within which or outside of which the UAV can fly. The virtual boundary may take any suitable shape or configuration.

Upon receipt of the user input defining the virtual boundary, processor 58 generates a GUI that includes a 3D virtual containment space for the flight of the UAV based on the user input. Processor 58 may generate the GUI in any suitable manner. For example, processor 58 may analyze the user input defining the virtual boundary in order to extrapolate a 3D space within which or outside of which the UAV must remain based on the virtual boundary. In examples in which the virtual boundary is defined by the user as a single line indicating a flight path, processor 58 may identify a 3D flight corridor surrounding the flight path, e.g., based on an approved range of distance from the flight path the UAV may be permitted to fly. In examples in which the virtual boundary defines a 2D space within which or outside of which the UAV must remain (e.g., as in the examples of FIGS. 2 and 3A-3C), processor 58 may add an additional component, such as a latitude component, a longitude component, or an altitude component, to define a 3D virtual containment space. In some examples, the user input may indicate all components of a 3D containment space (e.g., latitude, longitude, and altitude components), and processor 58 may directly render the GUI including the 3D virtual containment space defined by the user input.

In some examples, upon generating the GUI including the 3D virtual containment space, processor 58 may further determine whether some or all of the 3D virtual containment space is acceptable or unacceptable. For example, processor 58 may, in some examples, determine that a portion of the 3D virtual containment space violates one or more governmental regulations or restriction, e.g., by automatically evaluating a database of regulations and restrictions (e.g., stored by memory 60 of OCU 22 or a memory of another device) and performing a comparison with the 3D virtual containment space. In response to determining that a portion of the 3D virtual containment space is not consistent with one or more rules, regulations, or restrictions, processor 58 may modify the 3D virtual containment space displayed via the GUI to be compliant, and processor 58 may generate a modified GUI including the modified containment space. In some examples, processor 58 may modify the 3D virtual containment space at least in part based on user input.

Similarly, processor 58 may determine whether a portion of the 3D virtual containment space overlaps with restricted airspace and, in response to determining that a portion of the 3D virtual containment space does overlap with restricted airspace, may modify the containment space, e.g., to exclude the portions of the containment space that overlap with the restricted airspace. Processor 58 may subsequently generate a modified GUI including the modified containment space. In some examples, processor 58 may modify the 3D virtual containment space at least in part based on user input.

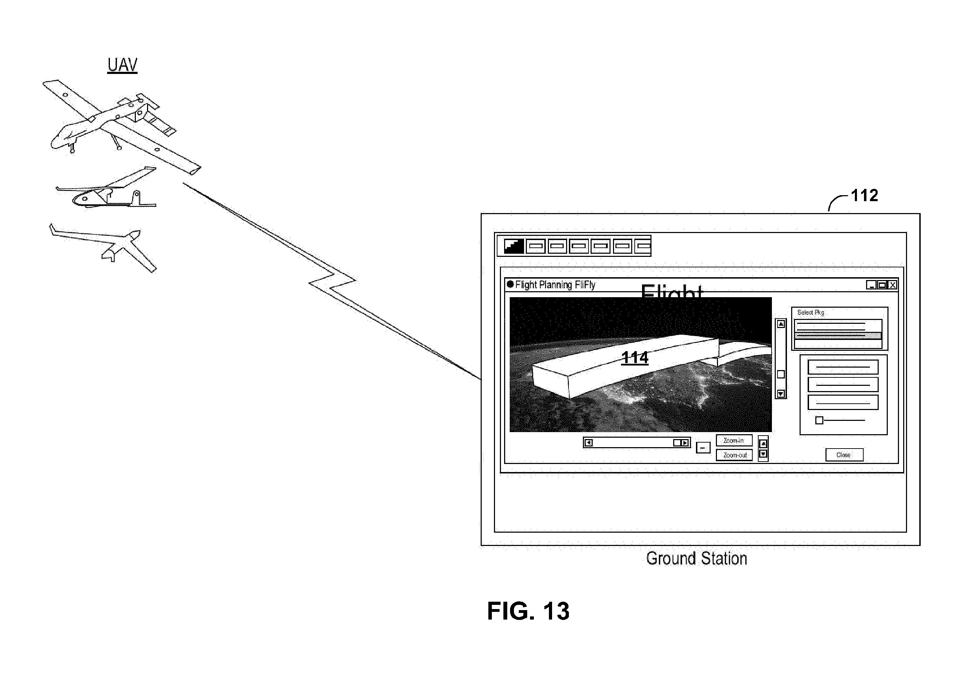

FIG. 13 illustrates GUI 112 including (e.g., illustrating) 3D virtual containment space 114 generated (e.g., by processor 58 of OCU 22 or another processor) based on user input defining a virtual boundary (e.g., a flight path or other flight area) for flight of a UAV. In some examples, as the flight of UAV 12 progresses, the operator can view the desired flight path and the vehicle position within the containment space 114 substantially in real-time. Containment space 114 can be, for example, a volume of space in which UAV may fly, such as a flight corridor (e.g., which may define a tolerance box, tube, or other 3D virtual containment space around the flight path for which flight of UAV 12 is permitted), or a volume of space in which UAV should not fly (e.g., should avoid during flight).

An example of GUI 112 that processor 58 of OCU 22 may generate and present in order to display the desired flight path and UAV 12 position within a flight corridor (defined based on the flight path) is shown in FIG. 13. The flight of UAV through containment space 114, or flight corridor in the example shown in FIG. 13, can be autonomous in some examples, and manual in other examples. In the manual case, containment space 114 may define a virtual fence that is visible to the operator, and may help the operator keep the UAV within the predefined tolerance around the desired flight path. In the example illustrated in FIG. 13 containment space 114 is overlaid on a map of the world (e.g., a satellite map, a schematic map, or another suitable type of map) such that a user (e.g., a pilot of UAV 12) can view the containment space 114 in virtual space. In other examples, containment space 114 may be represented in another manner. In some examples, GUI 112 may allow the user to move containment space 114 around to view the 3D containment space 114 from other angles.

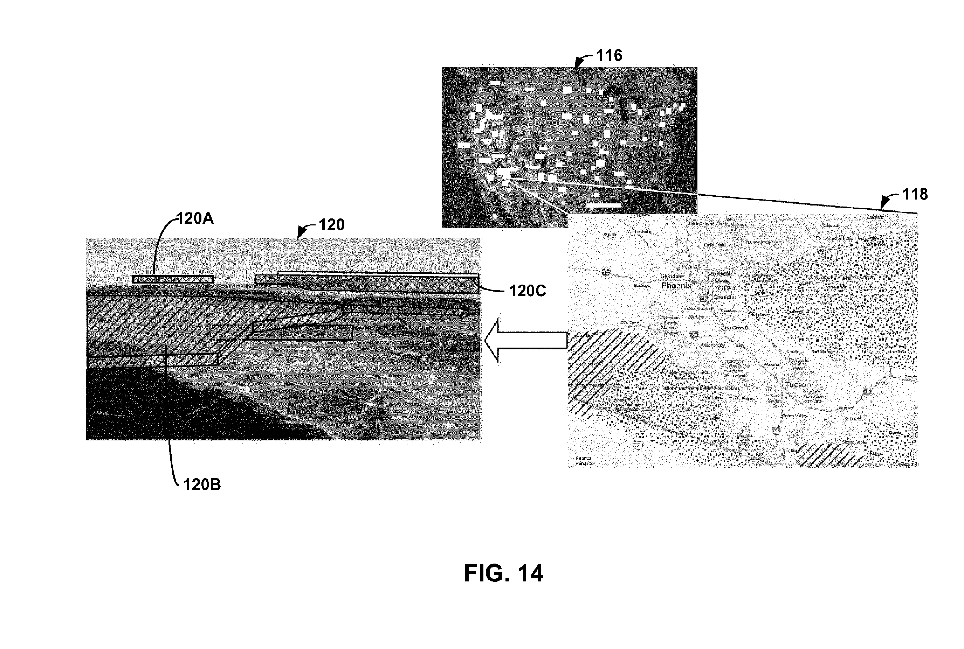

FIG. 14 illustrates three GUIs 116, 118, and 120 that may be viewed and interacted with by a user (e.g., a pilot of a UAV). GUI 116 illustrates a map of the United States (although, in other examples, it may be any other suitable region) overlaid with particular airspace information, such as restricted military areas or airspace classes. In some examples, a user may interact with GUI 116 to zoom in on a particular portion of the region, and in response to receiving the user input, processor 58 may generate a different "zoomed-in" GUI 118. The user may provide additional user input selecting a 3D view of the region, and processor 58 may generate GUI highlighting several special airspace regions, e.g., restricted airspace, particular airspace classes, or some other designation. The highlighting can be represented by any suitable indicator, such as, but not limited to, a particular line weight, a particular color, a particular pattern, and the like, or any combinations of indicators. Example 3D spaces 120A-120C, which can be virtual containment spaces in some examples, are shown as being highlighted via cross-hatching in GUI 120.

As described above, in some examples, processor 58 of OCU 22 can be configured to overlay various information in airspace depictions of a selected region on a 2D map, a 3D map, or both, as shown in FIG. 14. The overlaid information can include, for example, any one or more of restricted military areas or airspace classes, as described above, or information about traffic, populations of various areas, events in which a large number of people may be gathered, and weather information. The weather information may include current weather patterns, projected weather patterns, or both. The weather information may include, for example, wind speeds and wind direction, weather fronts, and temperatures. Processor 58 may obtain the weather information (as well as other information) from any suitable source, such as a remote database, a weather station, or via user input. A user may view the overlaid information and interact with user interface 62 (FIG. 6) to provide input that indicates one or more modifications to a flight location (e.g., a flight area or flight path) based on the information, e.g., to avoid populated areas, restricted spaces, weather fronts, and the like. In this way, OCU 22 may be configured to help an operator plan a flight for UAV 12 based on useful information.

A user may interact with user interface 62 to select a desired flight location for UAV 12 and processor 58 may retrieve the relevant information from memory 60 or from another source, such as a remote database, a weather station, and the like. For example, processor 58 may present a worldview map, and a user may provide input selecting the area in which the UAV 12 is to be flown or processor 58 may automatically select the start point from a current GPS location of UAV 12 (which may be received from UAV 12).

Functions executed by electronics associated with OCU 22 may be implemented, at least in part, by hardware, software, firmware or any combination thereof. For example, various aspects of the techniques may be implemented within one or more processors, including one or more microprocessors, DSPs, ASICs, FPGAs, or any other equivalent integrated or discrete logic circuitry, as well as any combinations of such components, embodied in electronics included in OCU 22. The term "processor" or "processing circuitry" may generally refer to any of the foregoing logic circuitry, alone or in combination with other logic circuitry, or any other equivalent circuitry.

Such hardware, software, firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

When implemented in software, functionality ascribed to OCU 22 and other systems described above, devices and techniques may be embodied as instructions on a computer-readable medium such as random access memory (RAM), read-only memory (ROM), non-volatile random access memory (NVRAM), electrically erasable programmable read-only memory (EEPROM), FLASH memory, magnetic data storage media, optical data storage media, or the like. The instructions may be executed to support one or more aspects of the functionality described in this disclosure. The computer-readable medium may be nontransitory.

Any of the described units, modules or components may be implemented together or separately as discrete but interoperable logic devices. Depiction of different features as modules or units is intended to highlight different functions and does not necessarily imply that such modules or units must be realized by separate hardware or software components. Rather, functionality associated with one or more modules or units may be performed by separate hardware or software components, or integrated within common or separate hardware or software components.

Various examples have been described. These and other examples are within the scope of the following claims.

## Claims

1. A system comprising:
means for receiving user input defining a virtual boundary for flight of an unmanned aerial vehicle (UAV); and
means for generating a graphical user interface (GUI) including a three-dimensional virtual containment space for the flight of the UAV based on the user input defining the virtual boundary.

2. The system of claim 1, wherein the three-dimensional virtual containment space for flight of the UAV is defined by a latitude component, a longitude component, and an altitude component.

3. The system of claim 1, further comprising means for generating an electronic flight plan based on the virtual boundary.

4. The system of claim 3, further comprising means for transmitting the electronic flight plan to an Air Traffic Control system for approval.

5. The system of claim 1, further comprising:
means for modifying the three-dimensional virtual containment space based on at least one governmental regulation or restriction; and
means for generating a modified GUI including the modified three-dimensional virtual containment space.

6. The system of claim 1, further comprising:
means for determining that a portion of the three-dimensional virtual containment space overlaps with restricted airspace;
means for modifying the three-dimensional virtual containment space based on the determination by the means for determining that the portion of the three-dimensional virtual containment space overlaps with the restricted airspace; and
means for generating a modified GUI including the modified three-dimensional virtual containment space.

7. The system of claim 1, wherein the means for modifying the three-dimensional virtual containment space modifies the three-dimensional virtual containment space to exclude the portion of the three-dimensional virtual containment space that overlaps with the restricted airspace.

8. The system of claim 1, further comprising:
means for determining that the UAV is nearing a boundary of the three-dimensional virtual containment space; and
means for generating an alert in response to determining that the UAV is nearing the boundary of the three-dimensional virtual containment space.

9. The system of claim 1, further comprising:
means for determining that the UAV is nearing a boundary of the three-dimensional virtual containment space; and
means for modifying flight of the UAV in response to determining that the UAV is nearing the boundary of the three-dimensional virtual containment space.

10. The system of any of claims 1-9, wherein the means for receiving user input comprises a user interface, and wherein the means for means for generating a GUI comprises a processor.
